(19) Europäisches Patentamt / European Patent Office / Office européen des brevets

(11) **EP 4 152 562 A1**

# (12) EUROPEAN PATENT APPLICATION
published in accordance with Art. 153(4) EPC

(43) Date of publication:
**22.03.2023 Bulletin 2023/12**

(21) Application number: **21822130.7**

(22) Date of filing: **15.03.2021**

(51) International Patent Classification (IPC):
*H02J 50/12* $^{(2016.01)}$  *H02J 7/00* $^{(2006.01)}$

(52) Cooperative Patent Classification (CPC):
Y02B 40/00

(86) International application number:
**PCT/CN2021/080675**

(87) International publication number:
**WO 2021/248953 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2020 CN 202010511956**

(71) Applicant: **Huawei Technologies Co., Ltd.
Longgang District,
Shenzhen,
Guangdong 518129 (CN)**

(72) Inventors:
• XIAO, Furong
  Shenzhen, Guangdong 518129 (CN)
• SHU, Weiliang
  Shenzhen, Guangdong 518129 (CN)
• LIU, Qitang
  Shenzhen, Guangdong 518129 (CN)
• FAN, Wingto
  Shenzhen, Guangdong 518129 (CN)
• LIU, Yanding
  Shenzhen, Guangdong 518129 (CN)

(74) Representative: **Epping - Hermann - Fischer
Patentanwaltsgesellschaft mbH
Schloßschmidstraße 5
80639 München (DE)**

## (54) WIRELESS CHARGING RECEIVING END, WIRELESS CHARGING METHOD AND ELECTRONIC DEVICE

(57)    A receive end for wireless charging, a wireless charging method, and an electronic device are provided. The receive end is configured to charge a battery by using energy provided by a transmit end, and includes a receive coil, a matching circuit (300), a rectifier circuit (400), and a controller (500). An input terminal of the matching circuit (300) is connected to the receive coil, and an output terminal of the matching circuit (300) is connected to an input terminal of the rectifier circuit (400). The receive coil is configured to: receive the energy transmitted by the transmit end, and output an alternating current. The matching circuit (300) is configured to: perform matching on the alternating current, and supply the alternating current to the input terminal of the rectifier circuit (400). The rectifier circuit (400) includes a controllable switching transistor, and the rectifier circuit (400) is configured to: rectify the input alternating current into a direct current under control of the controller (500), and supply the direct current to a charging control circuit (700). The controller (500) is configured to: when a charging power for charging the battery is less than a preset power threshold, control an on/off state of the controllable switching transistor, to reduce input impedance of the rectifier circuit (400). When the charging power is less than the preset power threshold, charging efficiency of the receive end can be improved.

FIG. 3

## Description

This application claims priority to Chinese Patent Application No. 2020105119563, filed with the China National Intellectual Property Administration on June 8, 2020 and entitled "RECEIVE END FOR WIRELESS CHARGING, WIRELESS CHARGING METHOD, AND ELECTRONIC DEVICE", which is incorporated herein by reference in its entirety.

## TECHNICAL FIELD

This application relates to the field of wireless charging technologies, and in particular, to a receive end for wireless charging, a wireless charging method, and an electronic device.

## BACKGROUND

Currently, many electronic devices have a near field communication (NFC, Near Field Communication) function, and wireless charging may be performed between electronic devices by using the NFC function. For example, a mobile phone may wirelessly charge a battery of a watch by using energy of a battery of the mobile phone through the NFC function.

An NFC wireless charging system includes a transmit end and a receive end. The transmit end and the receive end each are equipped with a matching circuit. A parameter of the matching circuit is designed based on charging by the receive end at a rated power, so that when the receive end charges a battery at the rated power, the matching circuit is at an optimal operating point, and charging efficiency of the receive end is high.

However, as a charging time increases, a battery level of the receive end becomes increasingly high, and the receive end no longer charges the battery at the rated power, but charges the battery at a charging power less than the rated power. In this case, the matching circuit deviates from the optimal operating point, causing low charging efficiency of the receive end.

## SUMMARY

To resolve the foregoing technical problem, this application provides a receive end for wireless charging, a wireless charging method, and an electronic device, to improve charging efficiency of a receive end for wireless charging.

According to a first aspect, a receive end for wireless charging is provided. The receive end is configured to charge a battery by using energy provided by a transmit end. A rectifier circuit in the receive end includes at least one controllable switching transistor. When a charging power is less than a preset power threshold, a controller controls an on/off state of the controllable switching transistor to reduce input impedance of the rectifier circuit, to reduce impact of an increase of the input impedance of the rectifier circuit on charging efficiency. The controller forcibly reduces the input impedance of the rectifier circuit to adapt to a varying charging power. Therefore, when the charging power is less than the preset power threshold, charging efficiency of the receive end can be improved. Specifically, the receive end includes a receive coil, a matching circuit, the rectifier circuit, and the controller. An input terminal of the matching circuit is connected to the receive coil, and an output terminal of the matching circuit is connected to an input terminal of the rectifier circuit. The receive coil is configured to: receive the energy transmitted by the transmit end, and output an alternating current. The matching circuit is configured to: perform matching on the alternating current, and supply the alternating current to the input terminal of the rectifier circuit. The rectifier circuit includes the controllable switching transistor, and the rectifier circuit is configured to: rectify the input alternating current into a direct current under the control of the controller, and supply the direct current to a charging control circuit. The controller is configured to: when the charging power for charging the battery is less than the preset power threshold, control the on/off state of the controllable switching transistor, to reduce the input impedance of the rectifier circuit. When the charging power is small, the input impedance of the rectifier circuit becomes larger. In this solution, the on/off state of the controllable switching transistor is controlled to forcibly reduce the input impedance of the rectifier circuit, to suppress impact of an increase of the input impedance of the rectifier current on charging efficiency. Therefore, when the charging power is less than the preset power threshold, charging efficiency of the receive end can be improved.

In a first possible implementation of the first aspect, after the rectifier circuit is bypassed, energy at the input terminal of the rectifier circuit cannot be transmitted to a direct current bus. Therefore, when the charging power is less than the preset power threshold, the controller may control the controllable switching transistor to be switched on within a preset time period, so that the rectifier circuit is bypassed. In this way, an input current of the rectifier circuit cannot enter the direct current bus within the preset time period, and an output voltage of the rectifier circuit is reduced, so that the input impedance of the rectifier circuit is reduced.

With reference to the first possible implementation of the first aspect, in a second possible implementation, the controller may obtain the preset time period based on a difference between the charging power and the preset power threshold, where the preset time period is directly proportional to the difference. Further, the controller may continuously adjust the input impedance of the rectifier circuit by using the preset time period.

With reference to the first or the second possible implementation of the first aspect, in a third possible implementation, the rectifier circuit includes at least one bridge arm that includes at least one diode, and the controllable switching transistor is connected in parallel to two ends of one diode of the at least one diode. When the charging power is less than the preset power threshold, the controller may control the controllable switching transistor to be switched on, to bypass the rectifier circuit to reduce the input impedance of the rectifier circuit.

With reference to the third possible implementation of the first aspect, in a fourth possible implementation, the rectifier circuit is a full-bridge rectifier circuit, and the rectifier circuit includes a first bridge arm and a second bridge arm that are connected in parallel. A middle point of the first bridge arm is connected to a positive output terminal of the matching circuit, and a middle point of the second bridge arm is connected to a negative output terminal of the matching circuit. The controllable switching transistor is located in at least one of the first bridge arm and the second bridge arm.

With reference to the fourth possible implementation of the first aspect, in a fifth possible implementation, the rectifier circuit includes a first switching transistor, and the first switching transistor is located in the first bridge arm or the second bridge arm. Because the first switching transistor is a high-frequency switching transistor, after controlling the first switching transistor to be switched on, the controller no longer controls the first switching transistor to be frequently switched on or switched off, thereby reducing a loss caused by switching on or switching off the first switching transistor. Therefore, when the charging power is less than the preset power threshold, the controller may control the first switching transistor to be always on, thereby reducing a loss caused by switching on or switching off the first switching transistor, and further reducing a loss caused by the rectifier circuit. In addition, a loss caused by a current flowing through a high-frequency switching transistor is less than a loss caused by a current flowing through a diode, and when the charging power is less than the preset power threshold, the controller controls the first switching transistor to be switched on until wireless charging ends. Therefore, when the charging power is subsequently less than the preset power threshold, the input current of the rectifier circuit passes through the first switching transistor, thereby further reducing a loss caused by the rectifier circuit.

With reference to the fourth possible implementation of the first aspect, in a sixth possible implementation, the rectifier circuit includes the following two controllable switching transistors: a first switching transistor and a second switching transistor. The first switching transistor is located in a lower-half bridge arm of the first bridge arm. The second switching transistor is located in a lower-half bridge arm of the second bridge arm. Because the difference between the charging power and the preset power threshold is positively correlated with the preset time period, when the difference is larger, the preset time period is longer. The controller may continuously adjust the input impedance of the rectifier circuit based on a preset time period of the first switching transistor and a preset time period of the second switching transistor. When the preset time period is longer, an input voltage of the rectifier circuit is smaller, and when the charging power remains unchanged, the input impedance of the rectifier circuit is smaller. When the preset time period is shorter, an input voltage of the rectifier circuit is larger, and when the charging power remains unchanged, the input impedance of the rectifier circuit is larger. Therefore, when the charging power is less than the preset power threshold, the controller may obtain a value of the preset time period based on the difference between the charging power and the preset power threshold, to continuously adjust the input impedance of the rectifier circuit, to reduce impact of the input impedance of the rectifier circuit on charging efficiency of the receive end. Specifically, when the charging power for the battery is less than the preset power threshold and the input current of the rectifier circuit is positive, the controller may control the first switching transistor to be switched on for the preset time period; and the controller is further configured to: when the charging power for the battery is less than the preset power threshold and the input current of the rectifier circuit is negative, control the second switching transistor to be switched on for the preset time period.

With reference to the fourth possible implementation of the first aspect, in a seventh possible implementation, the rectifier circuit is a full-bridge rectifier circuit and includes the following four controllable switching transistors: a first switching transistor, a second switching transistor, a third switching transistor, and a fourth switching transistor. The first switching transistor is located in a lower-half bridge arm of the first bridge arm, the second switching transistor is located in a lower-half bridge arm of the second bridge arm, the third switching transistor is located in an upper-half bridge arm of the first bridge arm, and the fourth switching transistor is located in an upper-half bridge arm of the second bridge arm. When a polarity of the input current of the rectifier circuit is positive, the controller controls the second switching transistor to be switched on; controls the fourth switching transistor to be switched off; controls the first switching transistor to be switched on for a preset time period and then switched off, and after a delay of a preset time, controls the third switching transistor to be switched on; and when the input current becomes zero, controls the second switching transistor and the third switching transistor to be switched off. In this case, the first switching transistor, the second switching transistor, the third switching transistor, and the fourth switching transistor are all in an off state. When a polarity of the input current of the rectifier circuit is negative, the controller controls the first switching transistor to be switched on; controls the third switching transistor to be switched off; controls the second switching transistor to be switched on for a preset time period and then switched off, and after a delay of a preset time, controls the fourth switching transistor to be switched on; and when the input current becomes zero, controls the first switching transistor and the fourth switching transistor to be switched off. In this case, the first switching transistor, the second switching transistor, the third switching transistor, and the fourth switching transistor are all in an off state. When the charging power is less than the preset power threshold, the controller may obtain a value of the preset time period based on the difference between the charging power and the preset power threshold, to continuously adjust the input impedance of the rectifier circuit, to reduce impact of the input impedance of the rectifier circuit on charging efficiency of the receive end.

According to a second aspect, a control method for wireless charging is provided, applied to a receive end for wireless charging. The receive end is configured to charge a battery by using energy provided by a transmit end. In a wireless charging process, as a charging time increases, a battery level becomes increasingly high, and the receive end no longer charges the battery at a rated power, but charges the battery at a charging power less than the rated power. The charging power for the battery becomes smaller, and output impedance of a rectifier circuit becomes larger. Because input impedance of the rectifier circuit is positively correlated with the output impedance, the input impedance also becomes larger. However, a parameter of a matching circuit is designed based on charging the battery by the receive end at the rated power. After the charging power for the battery becomes smaller, the input impedance of the rectifier circuit becomes larger. As a result, the matching circuit deviates from an optimal operating point. Therefore, when the charging power is less than a preset power threshold, an on/off state of a controllable switching transistor needs to be controlled to reduce the input impedance of the rectifier circuit. Specifically, the receive end includes a receive coil, the matching circuit, and the rectifier circuit, and the rectifier circuit includes the controllable switching transistor.

The method includes:

controlling the rectifier circuit to rectify an input alternating current into a direct current and supply the direct current to a charging control circuit; and
when the charging power for charging the battery is less than the preset power threshold, controlling the on/off state of the controllable switching transistor to reduce the input impedance of the rectifier circuit.

With the wireless charging method in this solution, when the charging power is less than the preset power threshold, the controllable switching transistor is adjusted to be switched on, so that the rectifier circuit is bypassed, thereby reducing the input impedance of the rectifier circuit, and reducing impact of an increase of the input impedance of the rectifier circuit on charging efficiency of the receive end. Therefore, when the charging power is less than the preset power threshold, charging efficiency of the receive end can be improved.

With reference to the second aspect, in a first possible implementation, after the rectifier circuit is bypassed, energy at an input terminal of the rectifier circuit cannot be transmitted to a direct current bus. Therefore, when the charging power is less than the preset power threshold, the controllable switching transistor may be controlled to be switched on within a preset time period, so that the rectifier circuit is bypassed. In this way, an input current of the rectifier circuit cannot enter the direct current bus within the preset time period, and an output voltage of the rectifier circuit is reduced, so that the input impedance of the rectifier circuit is reduced.

With reference to the first possible implementation of the second aspect, in a second possible implementation, the preset time period may be obtained based on a difference between the charging power and the preset power threshold, where the preset time period is directly proportional to the difference. Further, a controller may continuously adjust the input impedance of the rectifier circuit by using the preset time period.

With reference to the first or the second possible implementation of the second aspect, in a third possible implementation, the rectifier circuit includes at least one bridge arm that includes at least one diode, and the controllable switching transistor is connected in parallel to two ends of one diode of the at least one diode. When the charging power is less than the preset power threshold, the controllable switching transistor is controlled to be switched on, to bypass the rectifier circuit to reduce the input impedance of the rectifier circuit.

With reference to the third possible implementation of the second aspect, in a fourth possible implementation, the rectifier circuit is a full-bridge rectifier circuit, and the rectifier circuit includes a first bridge arm and a second bridge arm that are connected in parallel. A middle point of the first bridge arm is connected to a positive output terminal of the matching circuit, and a middle point of the second bridge arm is connected to a negative output terminal of the matching circuit. The controllable switching transistor is located in at least one of the first bridge arm and the second bridge arm.

With reference to the fourth possible implementation of the second aspect, in a fifth possible implementation, the rectifier circuit includes a first switching transistor, and the first switching transistor is located in the first bridge arm or the second bridge arm. Because the first switching transistor is a high-frequency switching transistor, after the first switching transistor is controlled to be switched on, the first switching transistor is no longer controlled to be frequently switched on or switched off, thereby reducing a loss caused by switching on or switching off the first switching transistor. Therefore, when the charging power is less than the preset power threshold, the first switching transistor is controlled to be always on, thereby reducing a loss caused by switching on or switching off the first switching transistor, and further reducing a loss caused by the rectifier circuit. In addition, a loss caused by a current flowing through a high-frequency switching transistor is less than a loss caused by a current flowing through a diode, and when the charging power is less than the preset power threshold, the first switching transistor is controlled to be switched on until wireless charging ends. Therefore, when the charging power is subsequently less than the preset power threshold, the input current of the rectifier circuit passes through the first switching transistor, thereby further reducing a loss caused by the rectifier circuit. With reference to the fourth possible implementation of the second aspect, in a sixth possible implementation, the rectifier circuit includes the following two controllable switching transistors: a first switching transistor and a second switching transistor. The first switching transistor is located in a lower-half bridge arm of the first bridge arm. The second switching transistor is located in a lower-half bridge arm of the second bridge arm. Because the difference between the charging power and the preset power threshold is positively correlated with the preset time period, when the difference is larger, the preset time period is longer. The input impedance of the rectifier circuit may be continuously adjusted based on a preset time period of the first switching transistor and a preset time period of the second switching transistor. When the preset time period is longer, an input voltage of the rectifier circuit is smaller, and when the charging power remains unchanged, the input impedance of the rectifier circuit is smaller. When the preset time period is shorter, an input voltage of the rectifier circuit is larger, and when the charging power remains unchanged, the input impedance of the rectifier circuit is larger. Therefore, when the charging power is less than the preset power threshold, a value of the preset time period may be obtained based on the difference between the charging power and the preset power threshold, to continuously adjust the input impedance of the rectifier circuit, to reduce impact of the input impedance of the rectifier circuit on charging efficiency of the receive end. Specifically, when the charging power for the battery is less than the preset power threshold and the input current of the rectifier circuit is positive, the first switching transistor is controlled to be switched on for the preset time period; or when the charging power for the battery is less than the preset power threshold and the input current of the rectifier circuit is negative, the second switching transistor is controlled to be switched on for the preset time period.

With reference to the fourth possible implementation of the second aspect, in a seventh possible implementation, the rectifier circuit is a full-bridge rectifier circuit and includes the following four controllable switching transistors: a first switching transistor, a second switching transistor, a third switching transistor, and a fourth switching transistor. The first switching transistor is located in a lower-half bridge arm of the first bridge arm, the second switching transistor is located in a lower-half bridge arm of the second bridge arm, the third switching transistor is located in an upper-half bridge arm of the first bridge arm, and the fourth switching transistor is located in an upper-half bridge arm of the second bridge arm. When a polarity of the input current of the rectifier circuit is positive, the second switching transistor is controlled to be switched on; the fourth switching transistor is controlled to be switched off; the first switching transistor is controlled to be switched on for a preset time period and then switched off, and after a delay of a preset time, the third switching transistor is controlled to be switched on; and when the input current becomes zero, the second switching transistor and the third switching transistor are controlled to be switched off. In this case, the first switching transistor, the second switching transistor, the third switching transistor, and the fourth switching transistor are all in an off state. When a polarity of the input current of the rectifier circuit is negative, the first switching transistor is controlled to be switched on; the third switching transistor is controlled to be switched off; the second switching transistor is controlled to be switched on for a preset time period and then switched off, and after a delay of a preset time, the fourth switching transistor is controlled to be switched on; and when the input current becomes zero, the first switching transistor and the fourth switching transistor are controlled to be switched off. In this case, the first switching transistor, the second switching transistor, the third switching transistor, and the fourth switching transistor are all in an off state. When the charging power is less than the preset power threshold, a value of the preset time period may be obtained based on the difference between the charging power and the preset power threshold, to continuously adjust the input impedance of the rectifier circuit, to reduce impact of the input impedance of the rectifier circuit on charging efficiency of the receive end.

According to a third aspect, an electronic device is provided, including the receive end provided in the first aspect.

It can be learned from the foregoing technical solutions that this application has at least the following advantages:

The matching circuit of the receive end is designed based on the rated power during charging. However, in a charging process, it is impossible to perform charging always at the rated power. Therefore, when the charging power is less than the preset power threshold, the input impedance of the rectifier circuit needs to be adjusted, to adapt to a varying charging power and improve charging efficiency. Specifically, the rectifier circuit of the receive end includes the at least one controllable switching transistor. When the charging power for the battery is less than the preset power threshold, the controller controls the on/off state of the controllable switching transistor to reduce the input impedance of the rectifier circuit. When the charging power is small, the input impedance of the rectifier circuit becomes larger. In this solution, the on/off state of the controllable switching transistor is controlled to forcibly reduce the input impedance of the rectifier circuit, to suppress impact of an increase of the input impedance of the rectifier current on charging efficiency. Therefore, when the charging power is less than the preset power threshold, charging efficiency of the receive end can be improved.

## BRIEF DESCRIPTION OF DRAWINGS

FIG. 1A is a schematic diagram of an NFC wireless charging system according to this application;

FIG. 1B is a schematic diagram of another NFC wireless charging system according to this application;

FIG. 2 is a schematic diagram of still another NFC wireless charging system according to this application;

FIG. 3 is a schematic diagram of a receive end for NFC wireless charging according to this application;

FIG. 4 is an operating flowchart of a receive end according to this application;

FIG. 5A is a line graph of a change of an impedance characteristic with a charging power according to this application;

FIG. 5B is a line graph of a change of charging efficiency with a charging power according to this application;

FIG. 6 is a schematic diagram of another receive end for NFC wireless charging according to this application;

FIG. 7 is an operating flowchart of another receive end according to this application;

FIG. 8 is a schematic diagram of still another receive end for NFC wireless charging according to this application;

FIG. 9 is an operating flowchart of still another receive end according to this application;

FIG. 10 is a diagram of an operating timing of a controllable switching transistor according to this application;

FIG. 11 is a schematic diagram of yet another receive end for NFC wireless charging according to this application;

FIG. 12 is an operating flowchart of yet another receive end according to this application;

FIG. 13 is a diagram of an operating timing of another controllable switching transistor according to this application;

FIG. 14 is a flowchart of a wireless charging method according to this application;

FIG. 15 is a flowchart of another wireless charging method according to this application;

FIG. 16 is a flowchart of still another wireless charging method according to this application; and

FIG. 17 is a flowchart of yet another wireless charging method according to this application.

## DESCRIPTION OF EMBODIMENTS

To enable a person skilled in the art to better understand technical solutions provided in embodiments of this application, the following first describes an application scenario of this application.

The application scenario is not specifically limited in this application, and may be any scenario in which an electronic device uses NFC wireless charging. The electronic device may be a mobile phone (mobile phone), a tablet computer (pad), a computer with a wireless transceiver function, an intelligent wearable product (for example, a smartwatch, a smart band, or a headset), a virtual reality (VR, virtual reality) terminal device, an augmented reality (AR, augmented reality) terminal device, or the like. For example, a mobile phone wirelessly charges a battery of a smartwatch by using energy of a battery of the mobile phone through an NFC function.

This application is applicable to an electronic device with an NFC function, and NFC wireless charging is performed between electronic devices by using the NFC function.

In this application, wireless charging is not specifically limited to the NFC wireless charging, and this application is also applicable to another wireless charging network with a matching circuit or another wireless charging network with impedance transformation. For ease of description, the following describes technical solutions of this application in detail by using the NFC wireless charging as an example.

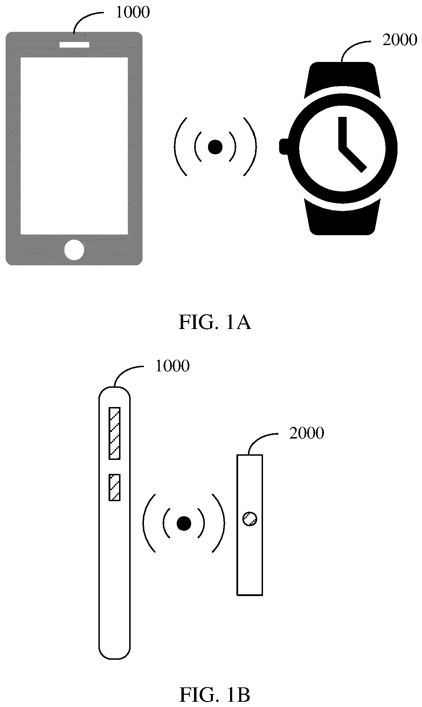

FIG. 1A is a schematic diagram of an NFC wireless charging system according to this application. The NFC wireless charging system includes a transmit end 1000 for NFC wireless charging and a receive end 2000 for NFC wireless charging.

For ease of description, the transmit end for NFC wireless charging is briefly referred to as a transmit end, and the receive end for NFC wireless charging is briefly referred to as a receive end. The transmit end 1000 is configured to transmit energy provided by a battery of the transmit end to the receive end 2000.

The receive end 2000 is configured to charge a battery of the receive end by using the received energy.

For example, the transmit end 1000 is a mobile phone, and the receive end 2000 is a smartwatch. When the smartwatch enters an NFC wireless charging range of the mobile phone, the mobile phone wirelessly charges the smartwatch through NFC wireless charging.

FIG. 1B is a schematic diagram of another NFC wireless charging system according to this application.

FIG. 1B is a side view of the receive end 2000 in proximity to the transmit end 1000.

A manner of proximity between the receive end 2000 and the transmit end 1000 is not limited in this application. The manner of proximity may be that one side of the receive end 2000 and one side of the transmit end 1000 approach each other.

When the smartwatch is in proximity to the mobile phone, interactive authentication for NFC wireless charging may start. After the authentication succeeds, the mobile phone starts to wirelessly charge the smartwatch.

In an early stage of wirelessly charging the smartwatch by the mobile phone, a battery level of the smartwatch is low, and a charging power for the battery of the smartwatch is large.

However, as a charging time increases, the battery level of the smartwatch becomes increasingly high, the charging power for the battery becomes smaller, and output impedance of a rectifier circuit becomes larger. Because the output impedance of the rectifier circuit is positively correlated with input impedance, the input impedance of the rectifier circuit also becomes larger. When a parameter of a matching circuit is designed based on charging of the smartwatch at a rated power, as the charging power becomes smaller, the input impedance of the rectifier circuit becomes larger. As a result, the matching circuit deviates from an optimal operating point, and charging efficiency of the smartwatch is reduced.

To resolve the foregoing technical problem, this application provides a receive end for NFC wireless charging. A rectifier circuit in the receive end includes at least one controllable switching transistor. When a charging power is less than a preset power threshold, a controller controls an on/off state of the controllable switching transistor to reduce input impedance of the rectifier circuit, to reduce impact of an increase of the input impedance of the rectifier circuit on charging efficiency. The controller forcibly reduces the input impedance of the rectifier circuit to adapt to a varying charging power. Therefore, when the charging power is less than the preset power threshold, charging efficiency of the receive end can be improved.

For ease of understanding, the following first describes an operating principle of an NFC wireless charging system that includes a receive end and a transmit end.

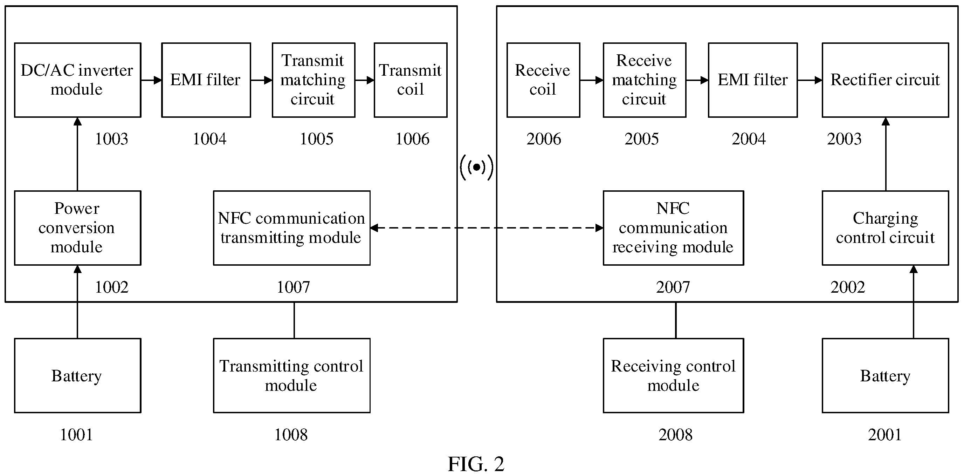

FIG. 2 is a schematic diagram of still another NFC wireless charging system according to this application.

A transmit end includes a power conversion module 1002, a DC/AC inverter module 1003, an electromagnetic interference (EMI, Electromagnetic Interference) filter 1004, a transmit matching circuit 1005, a transmit coil 1006, an NFC communication transmitting module 1007, and a transmitting control module 1008.

An input terminal of the power conversion module 1002 is connected to a battery 1001, and an output terminal of the power conversion module 1002 is connected to an input terminal of the DC/AC inverter module 1003.

The power conversion module 1002 is configured to perform boost conversion or buck conversion after obtaining energy from the battery 1001, and supply a proper input voltage to the DC/AC inverter module 1003. A form of the power conversion module 1002 is not specifically limited in this application. The power conversion module 1002 may be independent, or the power conversion module 1002 and the DC/AC inverter module may be integrated into one chip. In some scenarios, the power conversion module 1002 may not need to perform boost conversion or buck conversion, and the input terminal of the DC/AC inverter module 1003 is directly connected to the battery 1001.

The DC/AC inverter module 1003 is configured to convert a direct current input by the power conversion module 1002 into an alternating current at a preset frequency. A person skilled in the art may select a value of the preset frequency according to an actual requirement. The preset frequency may be any value ranging from 10 MHz to 20 MHz. For example, the preset frequency may be 13.56 MHz.

The DC/AC inverter module 1003 is further configured to modulate a communication signal before the NFC communication transmitting module 1007 transmits the communication signal. The NFC communication transmitting module 1007 is configured to transmit a modulated communication signal, and is further configured to demodulate a communication signal transmitted by a receive end, to implement exchange of information, such as a charging voltage, a charging current, a battery temperature, and other information, between the transmit end and the receive end. A form of the NFC communication transmitting module 1007 is not specifically limited in this application. The NFC communication transmitting module 1007 may be independent, or the NFC communication transmitting module 1007 and the DC/AC inverter module may be integrated into one chip.

An input terminal of the EMI filter 1004 is connected to an output terminal of the DC/AC inverter module 1003.

The EMI filter is configured to suppress a harmonic signal output by the DC/AC inverter module 1003, to reduce signal interference caused by the harmonic signal entering the transmit coil 1006.

An input terminal of the transmit matching circuit 1005 is connected to an output terminal of the EMI filter 1004.

The transmit matching circuit 1005 is configured to perform conversion processing on impedance reflected from the receive end to the transmit end, so that output impedance of the DC/AC inverter module 1003 is within a preset range, to ensure normal operating of the DC/AC inverter module 1003.

The transmit coil 1006 is connected to an output terminal of the transmit matching circuit 1005.

The transmit coil 1006 is configured to transmit, to the receive end in a form of magnetic induction, energy provided by the transmit end.

The transmitting control module 1008 is configured to monitor and control an operating status of the transmit end, to ensure normal operating of the transmit end.

The receive end includes a charging control circuit 2002, a rectifier circuit 2003, an EMI filter 2004, a receive matching circuit 2005, a receive coil 2006, an NFC communication receiving module 2007, and a receiving control module 2008.

The receive coil 2006 is connected to an input terminal of the receive matching circuit 2005. The receive coil 2006 is configured to receive, in a form of magnetic induction, energy transmitted by the transmit end.

An output terminal of the receive matching circuit 2005 is connected to an input terminal of the EMI filter 2004.

The receive matching circuit 2005 is configured to perform transformation processing on load impedance of the receive end, so that input impedance of the rectifier circuit 2003 is within a preset range, to improve charging efficiency of the NFC wireless charging system.

An output terminal of the EMI filter 2004 is connected to an input terminal of the rectifier circuit 2003.

The EMI filter 2004 is configured to suppress a harmonic signal generated by the rectifier circuit 2003, to reduce signal interference caused by the harmonic signal entering the receive coil 2006.

An output terminal of the rectifier circuit 2003 is connected to an input terminal of the charging control circuit 2002.

The rectifier circuit 2003 is configured to convert an input alternating current into a direct current.

The rectifier circuit 2003 includes a controllable switching transistor. The rectifier circuit 2003 changes the input impedance of the rectifier circuit under the control of the receiving control module 2008. When a charging power is less than a preset power threshold, the input impedance of the rectifier circuit 2003 becomes larger. As a result, the matching circuit 2005 deviates from an optimal operating point, and charging efficiency of the receive end is reduced. Therefore, when the charging power is less than the preset power threshold, the input impedance of the rectifier circuit 2003 needs to be reduced to adapt to a varying charging power. An on/off state of the controllable switching transistor is controlled to forcibly reduce the input impedance of the rectifier circuit, to reduce impact of an increase of the input impedance of the rectifier circuit on charging efficiency. Therefore, when the charging power is less than the preset power threshold, charging efficiency of the receive end can be improved.

An output terminal of the charging control circuit 2002 is connected to a battery 2001.

The charging control circuit 2002 is configured to charge the battery, and is further configured to control a charging status of the battery, to ensure that information, such as a charging voltage and a charging current, in an NFC wireless charging process is within a calibration range of the battery 2001.

The NFC communication receiving module 2007 is configured to demodulate a communication signal transmitted by the transmit end, to implement exchange of information, such as a charging voltage, a charging current, a battery temperature, and other information, between the transmit end and the receive end.

The receiving control module 2008 is configured to monitor and control an operating status of the receive end, and is further configured to control the on/off state of the controllable switching transistor based on the charging power for the battery in the NFC wireless charging process, to adjust the input impedance of the rectifier circuit 2003.

The foregoing describes the operating principle of the NFC wireless charging system. The following specifically describes a receive end provided in this application.

Receive end embodiment 1:

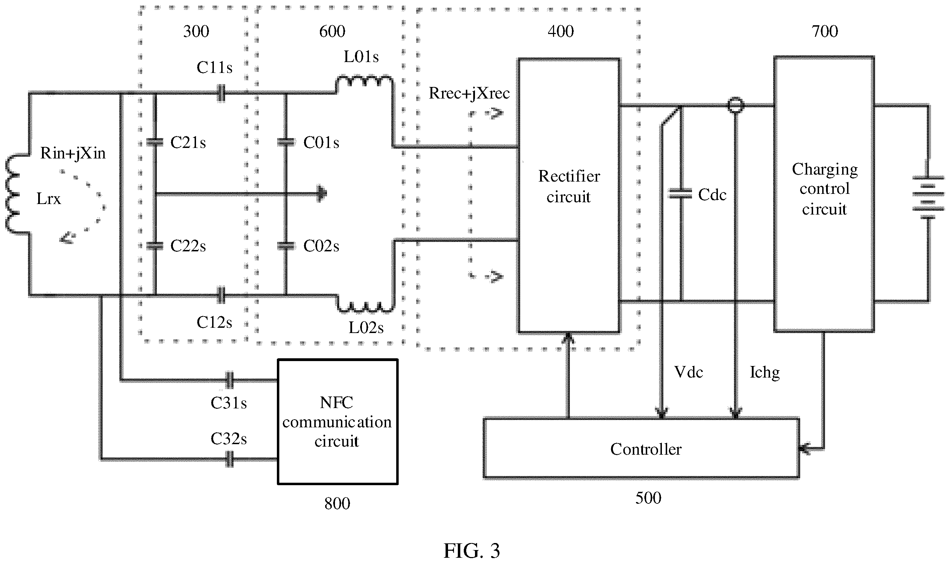

FIG. 3 is a schematic diagram of a receive end for NFC wireless charging according to this application.

The receive end includes a receive coil Lrx, a matching circuit 300, a rectifier circuit 400, and a controller 500.

A topology of the matching circuit 300 is not specifically limited in this application. A person skilled in the art may select a corresponding topology of the matching circuit 300 according to an actual requirement. FIG. 3 shows only an example topology of the matching circuit 300.

An input terminal of the matching circuit 300 is connected to the receive coil Lrx, and an output terminal of the matching circuit 300 is connected to an input terminal of the rectifier circuit 400. To suppress a harmonic signal generated by the rectifier circuit 400 to reduce signal interference caused by the harmonic signal entering the receive coil Lrx, an EMI filter 600 is connected in series between the matching circuit 300 and the rectifier circuit 400.

The matching circuit 300 includes a first capacitor C11s, a second capacitor C12s, a third capacitor C21s, and a fourth capacitor C22s.

The matching circuit 300 is configured to perform matching on an alternating current output by the receive coil Lrx, and then transmit the alternating current to the input terminal of the rectifier circuit 400.

A topology of the EMI filter 600 is not specifically limited in this application. A person skilled in the art may select a corresponding topology of the EMI filter 600 according to an actual requirement. FIG. 3 shows only an example topology of the EMI filter 600.

The EMI filter 600 includes a fourth capacitor C01s, a fifth capacitor C02s, a first inductor L01s, and a second inductor L02s.

A first terminal of C21s is grounded, a second terminal of C21s is connected to a first terminal of C11s, a second terminal of C11s is connected to a first terminal of C01s, a second terminal of C01s is grounded, a first terminal of L01s is connected to the first terminal of C01s, and a second terminal of L01s is connected to a positive input terminal of the rectifier circuit 400. A first terminal of C22s is grounded, a second terminal of C22s is connected to a first terminal of C12s, a second terminal of C12s is connected to a first terminal of C02s, a second terminal of C02s is grounded, a first terminal of L02s is connected to the first terminal of C02s, and a second terminal of L02s is connected to a negative input terminal of the rectifier circuit 400.

The receive coil Lrx receives, through magnetic field coupling with a transmit coil of a transmit end, energy emitted by the transmit end, and outputs an alternating current.

The rectifier circuit 400 includes at least one controllable switching transistor.

The rectifier circuit 400 rectifies an input alternating current into a direct current under the control of the controller 500, and supplies the direct current to a charging control circuit 700.

A type of the rectifier circuit 400 is not limited in this application. For example, the rectifier circuit 400 may include four controllable switching transistors, or may include two controllable switching transistors, or may include one controllable switching transistor.

An output terminal of the rectifier circuit 400 is connected in parallel to a direct current bus capacitor Cdc.

An input terminal of the charging control circuit 700 is connected to the output terminal of the rectifier circuit 400, and an output terminal of the charging control circuit 700 is connected to a battery.

The charging control circuit 700 may be a charging control chip, or may be a charging control circuit built by using basic electrical elements. The charging control circuit 700 charges the battery under the control of the controller 500.

The matching circuit 300 of the receive end is designed based on charging the battery by the receive end at a rated power. However, in a charging process, the receive end does not charge the battery always at the rated power. As a charging time increases, a battery level of the receive end becomes increasingly high, a charging power for the battery becomes smaller, and output impedance of the rectifier circuit 400 becomes larger. The output impedance of the rectifier circuit 400 is positively correlated with input impedance, and therefore the input impedance of the rectifier circuit 400 also becomes larger. Therefore, when the charging power is less than a preset power threshold, the input impedance of the rectifier circuit needs to be adjusted, to adapt to a varying charging power and improve charging efficiency. When the charging power for the battery is less than the preset power threshold, the controller 500 controls an on/off state of the controllable switching transistor to reduce the input impedance of the rectifier circuit 400. For example, the controller 500 controls the at least one controllable switching transistor to be switched on for a preset time period, so that the rectifier circuit 400 is bypassed, and energy at the input terminal of the rectifier circuit cannot be transmitted to a direct current bus. An input current of the rectifier circuit cannot enter the direct current bus within the preset time period. Therefore, an output voltage of the rectifier circuit is reduced, so that the input impedance of the rectifier circuit is reduced. When the charging power is small, the input impedance of the rectifier circuit becomes larger. In this solution, the controllable switching transistor is controlled to be switched on for the preset time period to forcibly reduce the input impedance of the rectifier circuit, to suppress impact of an increase of the input impedance of the rectifier circuit on charging efficiency, so that the matching circuit 300 still operates at an optimal operating point. Therefore, when the charging power is less than the preset power threshold, charging efficiency of the receive end can be improved.

A manner of obtaining the charging power is not specifically limited in this application. The charging power may be obtained through calculation by detecting a battery voltage and a charging current Ichg, to be specific, by multiplying the battery voltage by the charging current Ichg. Alternatively, the charging power may be obtained through calculation by detecting a direct current bus voltage Vdc and a charging current Ichg that are output by the rectifier circuit 400, to be specific, by multiplying the direct current bus voltage Vdc by the charging current Ichg. Alternatively, the charging power may be directly obtained from a charging control chip, and the charging control chip may directly provide the charging power for the battery.

To implement information exchange between the receive end and the transmit end, the receive end further includes an NFC communication circuit 800.

The NFC communication circuit 800 is configured to exchange charging information and control information with the transmit end. For example, the NFC communication circuit 800 receives control information sent by the transmit end, and when the control information indicates to end charging, the controller 500 controls, based on the control information, the receive end to end charging.

For ease of understanding, the following describes a technical solution of this application in detail with reference to an operating flowchart of a receive end.

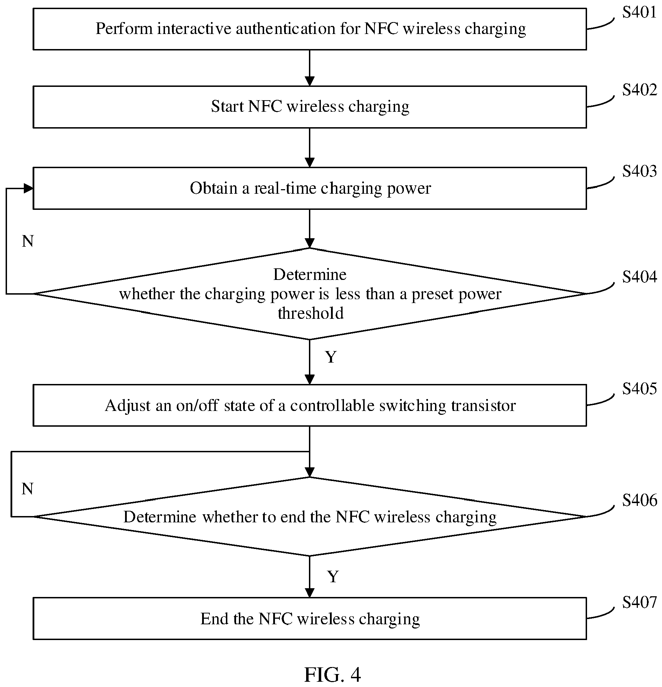

FIG. 4 is an operating flowchart of a receive end according to this application.

An operating process of the receive end includes the following steps.

S401: Perform interactive authentication for NFC wireless charging.

Before a transmit end wirelessly charges the receive end, interactive authentication for NFC wireless charging needs to be performed. After the interactive authentication for NFC wireless charging is completed, NFC wireless charging starts.

With reference to FIG. 3, the receive end communicates with the transmit end by using the NFC communication circuit 800, to obtain charging information and control information, to perform interactive authentication for NFC wireless charging.

S402: Start NFC wireless charging.

In an early stage of the NFC wireless charging, a battery level of the receive end is low, and the receive end charges the battery at a rated power. A matching circuit of the receive end is also designed based on charging the battery by the receive end at the rated power. When the receive end charges the battery at the rated power, the matching circuit of the receive end is at an optimal operating point, and charging efficiency of the receive end is high. In this case, a controller controls a controllable switching transistor to be switched off, without changing input impedance of a rectifier circuit.

S403: Obtain a real-time charging power.

With reference to FIG. 3, after the NFC wireless charging starts, the receive end does not charge the battery always at the rated power. As a charging time increases, the battery level becomes increasingly high, and a charging power also changes.

When the battery level is higher, the charging power is smaller. When the charging power becomes smaller, input impedance of the rectifier circuit 400 becomes larger. As a result, the matching circuit 300 deviates from an optimal operating point. Therefore, the receive end needs to obtain the real-time charging power for the battery, to determine whether the matching circuit 300 deviates from the optimal operating point. Further, the controller 500 controls an on/off state of a controllable switching transistor in the rectifier circuit 400 to reduce input impedance of the rectifier circuit 400. For example, the controller 500 controls at least one controllable switching transistor to be switched on for a preset time period, so that the rectifier circuit 400 is bypassed, and energy cannot be transmitted to a direct current bus through the rectifier circuit 400. An input current of the rectifier circuit cannot enter the direct current bus within the preset time period. Therefore, an output voltage of the rectifier circuit is reduced, so that the input impedance of the rectifier circuit is reduced.

The charging power may be obtained through calculation by detecting a battery voltage and a charging current Ichg, to be specific, by multiplying the battery voltage by the charging current Ichg. Alternatively, the charging power may be obtained through calculation by detecting a direct current bus voltage Vdc and a charging current Ichg that are output by the rectifier circuit 400, to be specific, by multiplying the direct current bus voltage Vdc by the charging current Ichg. Alternatively, the charging power may be directly obtained from a charging control chip, and the charging control chip may directly provide the charging power for the battery.

S404: Determine whether the charging power is less than a preset power threshold. If yes, perform S405; or if no, perform S403.

After the receive end obtains the charging power, the controller compares the charging power with the preset power threshold, to determine whether the charging power is less than the preset power threshold. A person skilled in the art may select a magnitude of the preset power threshold according to an actual requirement. The preset power threshold may be any value ranging from 20% to 40% of the rated charging power. For example, the preset power is 33% of the rated power. S405: Adjust an on/off state of a controllable switching transistor.

With reference to FIG. 3, when the charging power is less than the preset power threshold, the controller 500 of the receive end needs to control the on/off state of the controllable switching transistor in the rectifier circuit 400 to reduce the input impedance of the rectifier circuit 400. Output impedance of the rectifier circuit 400 is calculated by using the following formula:

$$R_L = \frac{V_{dc}^2}{P_O},$$

where

$P_o$ is the charging power, and $V_{dc}$ is an output voltage of the rectifier circuit 400. It can be learned from the foregoing formula that, when the output voltage $V_{dc}$ of the rectifier circuit 400 remains approximately unchanged, if the charging power $P_o$ changes, the output impedance $R_L$ of the rectifier circuit 400 also changes. As the battery level of the receive end becomes increasingly high, $P_o$ becomes smaller. When $V_{dc}$ remains approximately unchanged, $R_L$ becomes larger. However, the input impedance $R_{rec}$ of the rectifier circuit 400 is positively correlated with $R_L$. When $R_L$ becomes larger, $R_{rec}$ also becomes larger. As a result, the matching circuit 300 deviates from the optimal operating point, and charging efficiency of the receive end is reduced.

Therefore, when the charging power is less than the preset power threshold, the controller 500 needs to adjust $R_{rec}$ of the rectifier circuit 400, to adapt to a varying $P_o$ and improve charging efficiency of the receive end. The controller 500 controls the on/off state of the controllable switching transistor to reduce $R_{rec}$ of the rectifier circuit 400. When $P_o$ becomes smaller, the controller 500 controls the on/off state of the controllable switching transistor to forcibly reduce $R_{rec}$ of the rectifier circuit 400, to suppress impact of an increase of $R_{rec}$ on charging efficiency. Therefore, when the charging power is less than the preset power threshold, charging efficiency of the receive end can be improved.

S406: Determine whether to end the NFC wireless charging. If yes, perform S407.

With reference to FIG. 3, the controller 500 of the receive end determines, based on real-time charging information and/or control instruction information, whether to end the NFC wireless charging. For example, when the charging information indicates that the battery level of the receive end is full, the controller 500 ends the NFC wireless charging; or when the control instruction information instructs to end the NFC wireless charging, the controller 500 ends the NFC wireless charging. The charging information may be generated by the charging control circuit 700, and the control instruction information may be obtained by using the NFC communication circuit 800. S407: End the NFC wireless charging.

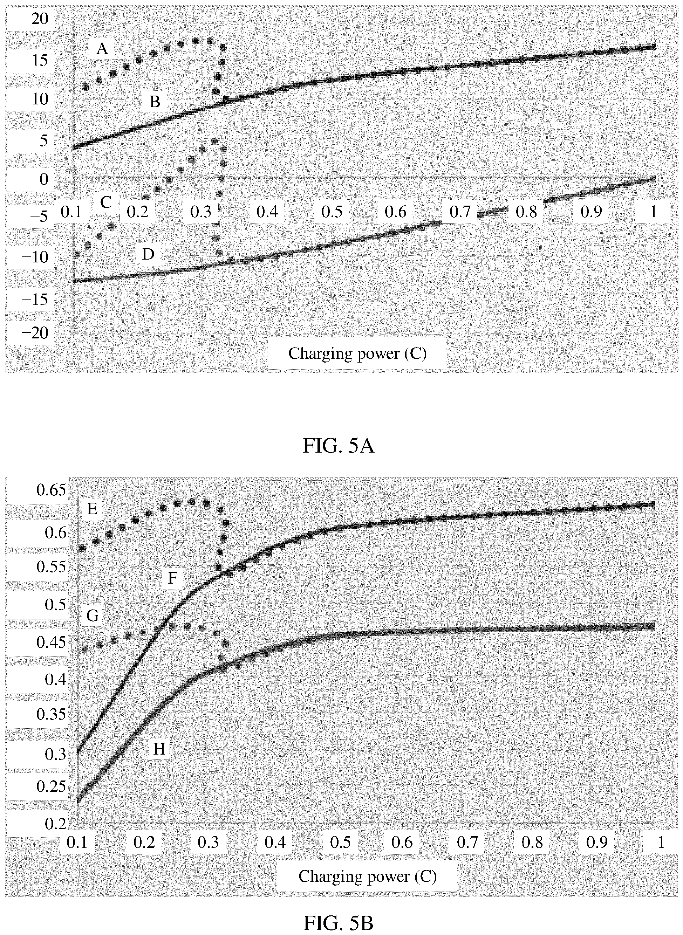

After determining to end the NFC wireless charging, the controller ends the NFC wireless charging. The foregoing describes the operating process of the receive end. The following describes a change of input impedance of a rectifier circuit with a charging power in this application with reference to FIG. 5A.

FIG. 5A is a line graph of a change of an impedance characteristic with a charging power according to this application.

A unit C is a unit of the charging power. For example, when the charging power is a rated power, the charging power is 1C; or when the charging power is 33% of the rated power, the charging power is 0.33C. Equivalent loop impedance of a receive end is as follows: $Z_{in} = (R_{in} + jX_{in})$, where $R_{in}$ is a real part, and $X_{in}$ is an imaginary part. The imaginary part being positive indicates being inductive, and the imaginary part being negative indicates being capacitive. A dashed line A is a curve of a change of $R_{in}$ with the charging power after input impedance of a rectifier circuit is adjusted. A solid line B is a curve of a change of $R_{in}$ with the charging power when the input impedance of the rectifier circuit is not adjusted. A dashed line C is a curve of a change of $X_{in}$ with the charging power after the input impedance of the rectifier circuit is adjusted. A solid line D is a curve of a change of $X_{in}$ with the charging power when the input impedance of the rectifier circuit is not adjusted.

It can be learned from FIG. 5A that, when the charging power is less than a preset power threshold (for example, 0.33C) and the input impedance of the rectifier circuit is not adjusted, $R_{in}$ becomes smaller, and an amplitude of $X_{in}$ becomes larger. When $R_{in}$ becomes smaller, efficiency $\eta_{rxcoil} = (R_{in} - R_{ac})/R_{in}$ of a receive coil becomes lower. When the amplitude of $X_{in}$ becomes larger, a power factor for transmitting, by a transmit coil, a power to the receive coil becomes smaller, and further, charging efficiency of an NFC wireless charging system is lower. However, when the charging power is less than the preset power threshold (for example, 0.33C) and the input impedance of the rectifier circuit is reduced, $R_{in}$ becomes larger, and therefore the efficiency $\eta_{rxcoil}$ of the receive coil becomes larger. When the amplitude of $X_{in}$ becomes smaller, the power factor for transmitting, by the transmit coil, a power to the receive coil becomes larger. Therefore, after the input impedance of the rectifier circuit is adjusted, charging efficiency of the receive end can be improved.

FIG. 5A describes the change of the input impedance of the rectifier circuit with the charging power in this application. The following describes a change of charging efficiency of a receive end with a charging power in this application with reference to FIG. 5B.

FIG. 5B is a line graph of a change of charging efficiency with a charging power according to this application.

A dashed line E is a curve of a change of efficiency $\eta_{rxcoil}$ of a receive coil with the charging power after input impedance of a rectifier circuit is adjusted. A solid line F is a curve of a change of the efficiency $\eta_{rxcoil}$ of the receive coil with the charging power when the input impedance of the rectifier circuit is not adjusted. A dashed line G is a curve of a change of charging efficiency of a receive end with the charging power after the input impedance of the rectifier circuit is adjusted. A solid line H is a curve of a change of the charging efficiency of the receive end with the charging power when the input impedance of the rectifier circuit is not adjusted.

It can be learned from FIG. 5B that, when the charging power is less than a preset power threshold (for example, 0.33C), compared with a case in which the input impedance of the rectifier circuit is not adjusted, after the input impedance of the rectifier circuit is adjusted, both $\eta_{rxcoil}$ and the charging efficiency of the receive end are high.

In this application, as a charging time increases, a battery level becomes increasingly high, and the receive end no longer charges the battery at the rated power, but charges the battery at a charging power less than the rated power. The charging power for the battery becomes smaller, and the output impedance of the rectifier circuit becomes larger. Because the input impedance of the rectifier circuit is positively correlated with the output impedance, the input impedance also becomes larger. However, a parameter of the matching circuit is designed based on charging the battery by the receive end at the rated power. After the charging power for the battery becomes smaller, the input impedance of the rectifier circuit becomes larger. As a result, the matching circuit deviates from the optimal operating point. Therefore, when the charging power is less than the preset power threshold, the controller needs to adjust the input impedance of the rectifier circuit, to adapt to a varying charging power and improve charging efficiency. Specifically, the controller of the receive end controls the controllable switching transistor to be switched on for the preset time period, so that the rectifier circuit is bypassed, to reduce the input impedance of the rectifier circuit. When the charging power is small, the controller of the receive end controls the controllable switching transistor to be switched on to forcibly reduce the input impedance of the rectifier circuit, to suppress impact of an increase of the input impedance of the rectifier circuit on charging efficiency. Therefore, when the charging power is less than the preset power threshold, after the receive end reduces the input impedance of the rectifier circuit, the matching circuit still operates at the optimal operating point. Therefore, when the charging power is less than the preset power threshold, charging efficiency of the receive end can be improved.

A specific form of the rectifier circuit is not limited in this application. The rectifier circuit may include one bridge arm, or may include two bridge arms, where each bridge arm includes at least one diode, and a controllable switching transistor is connected in parallel to two ends of one of the at least one diode. For ease of description, the following provides detailed descriptions by using an example in which the rectifier circuit is a full-bridge rectifier circuit including two bridge arms. A quantity of controllable switching transistors in the rectifier circuit is not limited in this application. There may be one or more controllable switching transistors. The following provides detailed descriptions in a receive end embodiment 2 by using an example in which the quantity of controllable switching transistors is 1.

Receive end embodiment 2:

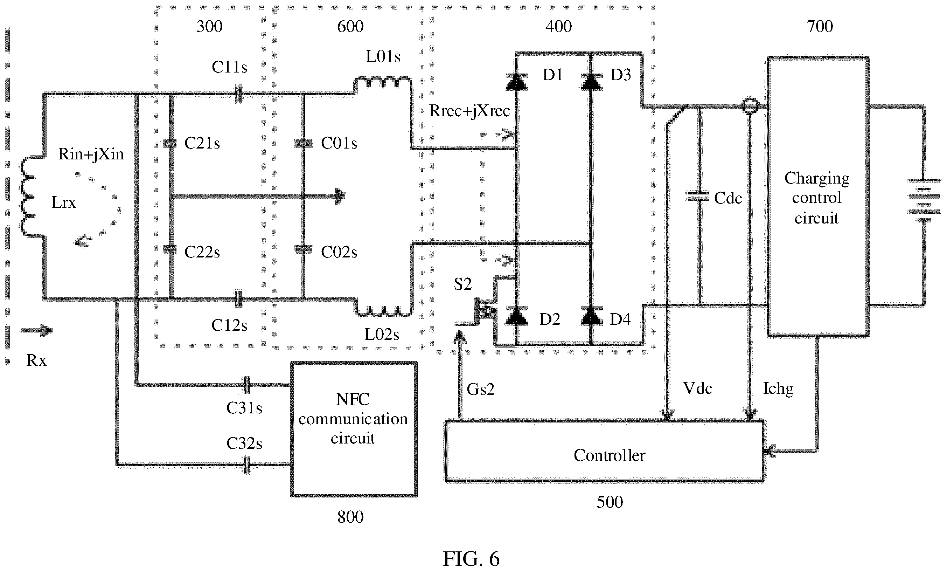

FIG. 6 is a schematic diagram of another receive end for NFC wireless charging according to this application.

A rectifier circuit 400 of the receive end includes a first bridge arm and a second bridge arm that are connected in parallel. A middle point of the first bridge arm is connected to a positive input terminal of a matching circuit 300, and a middle point of the second bridge arm is connected to a negative input terminal of the matching circuit 300. The rectifier circuit 400 includes a controllable switching transistor.

A specific position of the controllable switching transistor is not limited in this application. The controllable switching transistor may be located in the first bridge arm, or the controllable switching transistor may be located in the second bridge arm. For ease of description, an example in which the controllable switching transistor is located in the first bridge arm is used below for description.

The first bridge arm includes a first diode D2 and a third diode D1, the second bridge arm includes a second diode D4 and a fourth diode D3, and the controllable switching transistor is a first switching transistor S2.

A positive electrode of D2 is connected to a negative electrode of D1, the positive electrode of D2 is connected to the positive input terminal of the matching circuit 300, a negative electrode of D2 is connected to a negative electrode of D4, a positive electrode of D4 is connected to a negative electrode of D3, the positive electrode of D4 is connected to the negative input terminal of the matching circuit 300, and a positive electrode of D3 is connected to a positive electrode of D1. S2 is connected in parallel to two ends of D2. In addition, S2 may be alternatively connected in parallel to two ends of D1. To make the controllable switching transistor be driven more easily, an example in which S2 is connected in parallel to two ends of D2 is used below for description.

When a charging power is less than a preset power threshold, input impedance of the rectifier circuit 400 becomes larger, and the matching circuit 300 deviates from an optimal operating point. Therefore, a controller controls an on/off state of S2 to reduce the input impedance of the rectifier circuit 400, so that the matching circuit 300 operates at the optimal operating point, and when the charging power is less than the preset power threshold, charging efficiency of the receive end is improved.

Gs2 is a pulse control signal for S2. When Gs2 is at a high level, S2 is switched on; or when Gs2 is at a low level, S2 is switched off. When the charging power is less than the preset power threshold, the controller 500 controls S2 to be always on, to reduce the input impedance of the rectifier circuit 400. For example, the controller 500 controls Gs2 to be at the high level to control S2 to be switched on. With reference to an operating flowchart of the receive end, the following describes in detail the reducing, by the controller 500, the input impedance of the rectifier circuit to improve charging efficiency of the receive end.

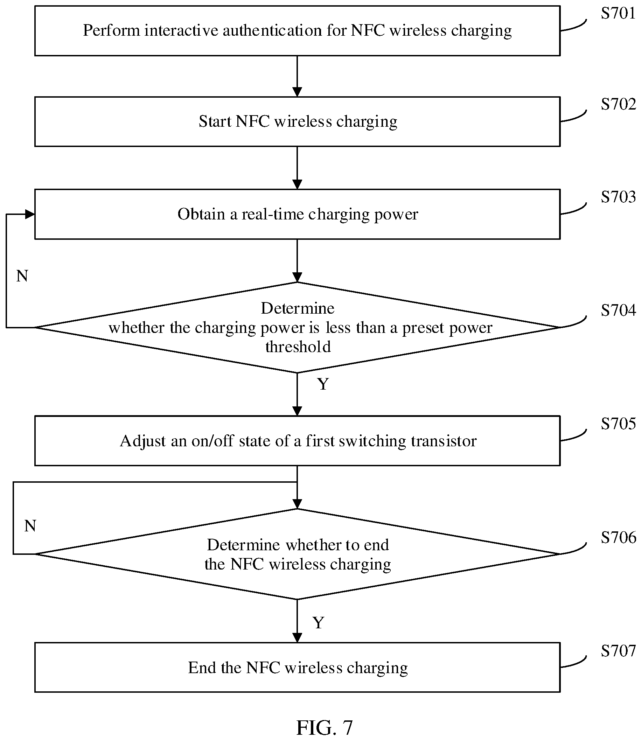

FIG. 7 is an operating flowchart of another receive end according to this application.

S701 to S704 are similar to S401 to S404, and S706 and S707 are similar to S406 and S407. For specific content, refer to the receive end embodiment 1 and FIG. 4. Details are not described herein again. The following describes differences from the receive end embodiment 1.

S705: Adjust an on/off state of a first switching transistor.

With reference to FIG. 6, when the charging power is less than the preset power threshold, the controller 500 of the receive end needs to control the on/off state of the controllable switching transistor in the rectifier circuit 400 to reduce the input impedance of the rectifier circuit 400.

In an NFC wireless charging process, when the charging power is greater than the preset power threshold, the controller 500 controls S2 to be switched off, and the rectifier circuit 400 is a full-bridge rectifier circuit. In this case, the input impedance of the rectifier circuit 400 is calculated by using the following formula:

$$R_{rec} = \frac{8V_{dc}}{\pi^2 I_{chg}}$$

, where
$V_{dc}$ is a voltage at two ends of a direct current bus capacitor Cdc, $I_{chg}$ is a charging current, and $R_{rec}$ is the input impedance of the rectifier circuit.

When the charging power is less than the preset power threshold, the controller 500 controls S2 to be switched on, and the rectifier circuit is a half-wave rectifier circuit. In this case, the input impedance of the rectifier circuit 400 is calculated by using the following formula:

$$R_{rec} = \frac{2V_{dc}}{\pi^2 I_{chg}},$$

where
$V_{dc}$ is a voltage at two ends of a direct current bus capacitor Cdc, $I_{chg}$ is a charging current, and $R_{rec}$ is the input impedance of the rectifier circuit.

According to the foregoing formulas for calculating the input impedance of the rectifier circuit 400 when S2 is switched on and when S2 is switched off, it can be learned that the input impedance of the rectifier circuit 400 differs by four times when an on/off state of S2 varies. Therefore, the controller 500 may control the on/off state of S2 to adjust the input impedance of the rectifier circuit 400.

When the charging power is less than the preset power threshold, the input impedance of the rectifier circuit 400 becomes larger, and the matching circuit 300 deviates from the optimal operating point. The controller 500 controls S2 to be switched on to adjust the rectifier circuit 400 to a half-wave rectifier circuit, so that the input impedance of the rectifier circuit 400 becomes smaller, to suppress impact of an increase of the input impedance of the rectifier circuit 400 on charging efficiency. When the charging power is less than the preset power threshold, after the controller 500 reduces the input impedance of the rectifier circuit 400, the matching circuit 300 still operates at the optimal operating point. Therefore, when the charging power is less than the preset power threshold, charging efficiency of the receive end can be improved.

In addition, when the charging power is less than the preset power threshold, the controller 500 controls S2 to be always on. The controller 500 controls S2 to be switched on to adjust the rectifier circuit 400 to a half-wave rectifier circuit, so that the input impedance of the rectifier circuit 400 is reduced. In a positive half-cycle of an input current of the rectifier circuit, the input current flows into the positive input terminal of the rectifier circuit 400, sequentially passes through S2 and D4, and flows out of the positive electrode of D4, so that the rectifier circuit 400 is bypassed, and the input current does not enter a direct current bus. In a negative half-cycle of the input current, the input current flows into the negative input terminal of the rectifier circuit 400, sequentially passes through D3, Cdc, and S2, and flows out of S2. After the current passes through Cdc, energy is transmitted to the charging control circuit 700.

When the charging power is less than the preset power threshold, the controller 500 controls S2 to be switched on until the NFC wireless charging ends. Because S2 is a high-frequency switching transistor, after controlling S2 to be switched on, the controller 500 no longer controls S2 to be frequently switched on or switched off, thereby reducing a loss caused by switching on or switching off S2. Therefore, when the charging power is less than the preset power threshold, the controller 500 may control S2 to be always on, thereby reducing a loss caused by switching on or switching off S2, and further reducing a loss caused by the rectifier circuit 400.

In addition, a loss caused by a current flowing through a high-frequency switching transistor is less than a loss caused by a current flowing through a diode, and when the charging power is less than the preset power threshold, the controller controls S2 to be switched on until the NFC wireless charging ends. Therefore, when the charging power is subsequently less than the preset power threshold, the input current of the rectifier circuit passes through S2, thereby further reducing a loss caused by the rectifier circuit.

In the descriptions of the foregoing embodiment, the quantity of controllable switching transistors is 1. The following provides detailed descriptions in a receive end embodiment 3 by using an example in which the quantity of controllable switching transistors is 2.

Receive end embodiment 3:

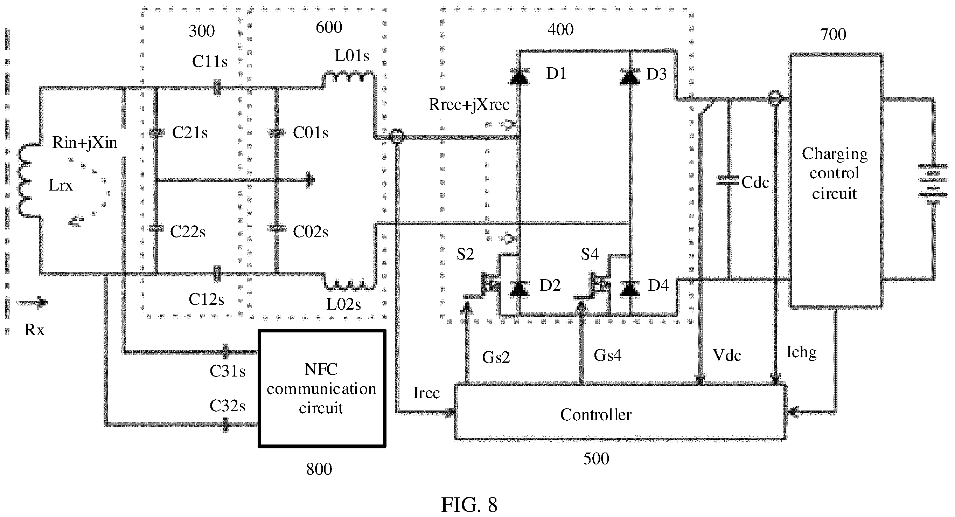

FIG. 8 is a schematic diagram of still another receive end for NFC wireless charging according to this application.

A rectifier circuit 400 of the receive end includes a first bridge arm and a second bridge arm that are connected in parallel. A middle point of the first bridge arm is connected to a positive input terminal of a matching circuit 300, and a middle point of the second bridge arm is connected to a negative input terminal of the matching circuit 300.

The rectifier circuit 400 includes the following two controllable switching transistors: a first switching transistor S2 and a second switching transistor S4.

Specific positions of S2 and S4 are not limited in this application. S2 may be located in an upper-half bridge arm of the first bridge arm, and S4 may be located in an upper-half bridge arm of the second bridge arm; or S2 may be located in a lower-half bridge arm of the first bridge arm, and S4 may be located in a lower-half bridge arm of the second bridge arm. For ease of description, an example in which S2 is located in the lower-half bridge arm of the first bridge arm and S4 is located in the lower-half bridge arm of the second bridge arm is used below for description.

The lower-half bridge arm of the first bridge arm is a first diode D2, and S2 is connected in parallel to two ends of D2. The lower-half bridge arm of the second bridge arm is a second diode D4, and S4 is connected in parallel to two ends of D4.

S2 and S4 are driven more easily when S2 is located in the lower-half bridge arm of the first bridge arm and S4 is located in the lower-half bridge arm of the second bridge arm.

When a charging power is less than a preset power threshold, input impedance of the rectifier circuit 400 becomes larger, and the matching circuit 300 deviates from an optimal operating point. Therefore, a controller 500 controls an on/off state of S2 and an on/off state of S4 to reduce the input impedance of the rectifier circuit 400, so that the matching circuit 300 operates at the optimal operating point, and when the charging power is less than the preset power threshold, charging efficiency of the receive end is improved.

In FIG. 8, Gs2 is a pulse control signal for S2, and Gs4 is a pulse control signal for S4. The controller 500 controls Gs2 to be at a high level to control S2 to be switched on, and controls Gs2 to be at a low level to control S2 to be switched off. Likewise, the controller 500 may also control Gs4 to control S4 to be switched on or switched off.

When the charging power is less than the preset power threshold, and when an input current of the rectifier circuit 400 is positive, the controller 500 controls Gs2 to be at the high level to control S2 to be switched on for a preset time period; or when an input current of the rectifier circuit 400 is negative, the controller 500 controls Gs4 to be at a high level to control S4 to be switched on for a preset time period. When S2 or S4 is switched on, the rectifier circuit 400 is bypassed, thereby reducing the input impedance of the rectifier circuit.

A difference between the charging power and the preset power threshold is positively correlated with the preset time period, and a larger difference between the charging power and the preset power threshold indicates a longer preset time period. Therefore, the controller 500 obtains the preset time period based on the difference between the charging power and the preset power threshold. A specific formula for calculating the preset time period may be obtained through offline test fitting.

For ease of understanding, the following describes a technical solution of this application in detail with reference to an operating flowchart of a receive end.

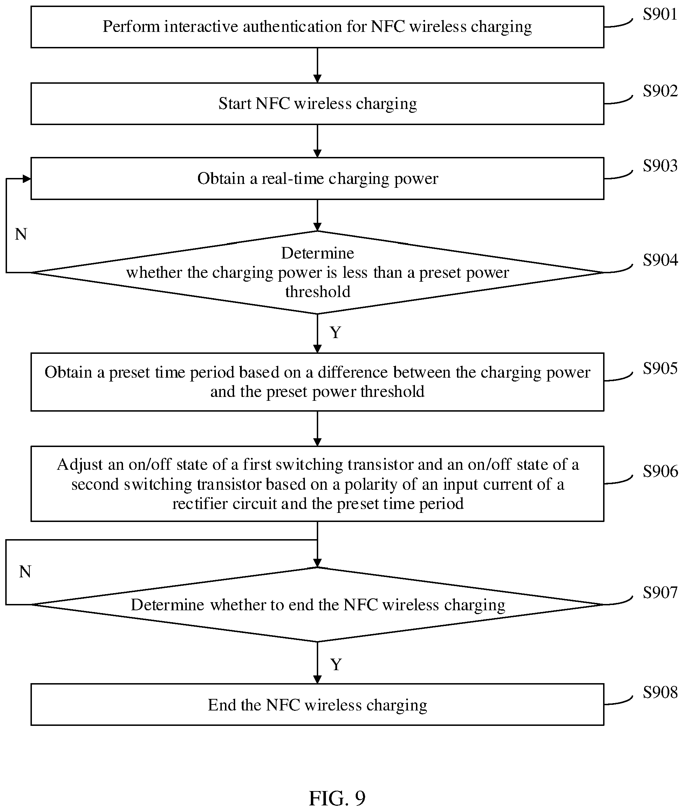

FIG. 9 is an operating flowchart of still another receive end according to this application.

S901 to S904 are similar to S401 to S404, and S907 and S908 are similar to S406 and S407. For specific content, refer to the receive end embodiment 1 and FIG. 4. Details are not described herein again. The following describes differences from the receive end embodiment 1.

S905: Obtain a preset time period based on a difference between the charging power and the preset power threshold.

After obtaining the real-time charging power in S903, the controller obtains the preset time period $t_{on}$ based on the difference between the charging power and the preset power threshold. A specific formula for calculating $t_{on}$ may be obtained through offline test fitting. A smaller difference indicates a smaller $t_{on}$, and a larger difference indicates a larger $t_{on}$. To prevent a negative current from appearing when an input current $I_{rec}$ of the rectifier circuit is positive and causing an additional loss, $t_{on}$ needs to be less than an upper limit value $t_{onmax}$. A specific value of the upper limit value $t_{onmax}$ is not specifically limited in this application. A person skilled in the art may select any value that meets a condition according to an actual requirement. For example, $t_{onmax}$ is one third of a time period corresponding to a case in which the input current $I_{rec}$ of the rectifier circuit is positive.

S906: Adjust an on/off state of a first switching transistor and an on/off state of a second switching transistor based on a polarity of an input current of the rectifier circuit and the preset time period. With reference to FIG. 8, when the first switching transistor S2 and the second switching transistor S4 are switched off, and when the polarity of the input current of the rectifier circuit varies, a path in which the current flows through the rectifier circuit varies. When the input current is positive, the input current sequentially flows through a third diode D1, a direct current bus capacitor Cdc, and the second diode D4, and flows out of a positive electrode of D4. When the input current is negative, the input current sequentially flows through a fourth diode D3, the direct current bus capacitor Cdc, and the first diode D2, and flows out of a positive electrode of D2. Therefore, the controller 500 may control an on/off state of S2 and an on/off state of S4 by detecting the polarity of the input current of the rectifier circuit 400, to reduce the input impedance of the rectifier circuit 400.

Specifically, when the charging power is less than the preset power threshold, the input impedance of the rectifier circuit 400 becomes larger. Therefore, when the input current is positive, the controller 500 needs to control S2 to be switched on for $t_{on}$ to change a path of the input current. Within a time of $t_{on}$, the input current flows into a positive input terminal of the rectifier circuit 400, sequentially passes through S2 and D4, and then flows out of the positive electrode of D4, so that the rectifier circuit 400 is bypassed, and the input current does not enter a direct current bus. When the input current is negative, the controller 500 needs to control S4 to be switched on for $t_{on}$ to change a path of the input current. Within a time of $t_{on}$, the input current flows into the negative input terminal of the rectifier circuit, sequentially passes through S4 and D2, and then flows out of the positive electrode of D2, so that the rectifier circuit 400 is bypassed, and the input current does not enter the direct current bus. The controller 500 may adjust a value of $t_{on}$ for which S2 and S4 are switched on, to adjust the input impedance of the rectifier circuit 400.

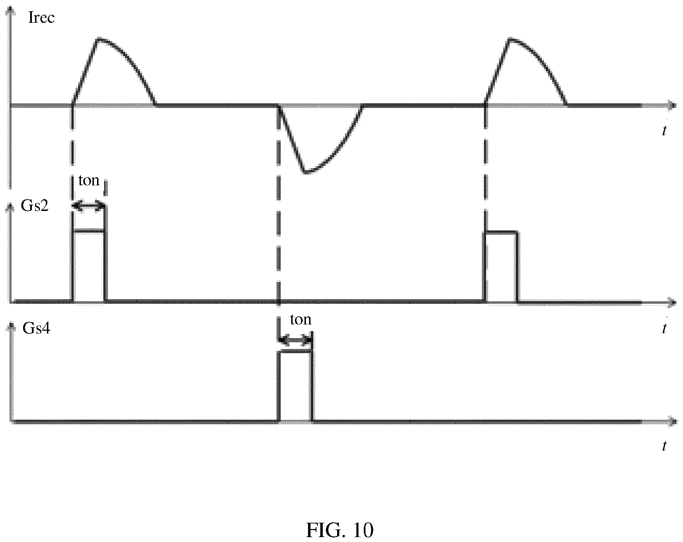

FIG. 10 is a diagram of an operating timing of a controllable switching transistor according to this application.

Gs2 is a pulse control signal for the first switching transistor, and Gs4 is a pulse control signal for the second switching transistor. When Gs2 is at a high level, the first switching transistor is switched on; or when Gs2 is at a low level, the first switching transistor is switched off. The controller may control Gs2 to control the first switching transistor to be switched on or switched off. Likewise, the controller may also control Gs4 to control the second switching transistor to be switched on or switched off. $I_{rec}$ is the input current of the rectifier circuit.

When a polarity of the input current $I_{rec}$ of the rectifier circuit is positive, the controller controls the first switching transistor to be switched on for $t_{on}$, and then controls the first switching transistor to be switched off.

When a polarity of the input current $I_{rec}$ of the rectifier circuit is negative, the controller controls the second switching transistor to be switched on for $t_{on}$, and then controls the second switching transistor to be switched off.

The difference between the charging power and the preset power threshold is positively correlated with $t_{on}$. When the difference is larger, $t_{on}$ is larger. The controller may continuously adjust the input impedance of the rectifier circuit based on $t_{on}$ of the first switching transistor and $t_{on}$ of the second switching transistor. When $t_{on}$ is larger, an input voltage of the rectifier circuit is smaller, and when the charging power remains unchanged, the input impedance of the rectifier circuit is smaller. When $t_{on}$ is smaller, an input voltage of the rectifier circuit is larger, and when the charging power remains unchanged, the input impedance of the rectifier circuit is larger. Therefore, when the charging power is less than the preset power threshold, the controller may obtain a value of $t_{on}$ based on the difference between the charging power and the preset power threshold, to continuously adjust the input impedance of the rectifier circuit, to reduce impact of the input impedance of the rectifier circuit on charging efficiency of the receive end. Therefore, the matching circuit is still at an optimal operating point, and when the charging power is less than the preset power threshold, charging efficiency of the receive end can be improved.

In addition, when the charging power is less than the preset power threshold, the controller controls the on/off state of the first switching transistor and the on/off state of the second switching transistor to reduce the input impedance of the rectifier circuit; and when the charging power is greater than the preset power threshold, the controller may also control the on/off state of the first switching transistor and the on/off state of the second switching transistor to reduce the input impedance of the rectifier circuit, to adapt to a change of the charging power, and improve charging efficiency of the receive end when the charging power is greater than the preset power threshold. Therefore, the matching circuit is always at the optimal operating point, and charging efficiency of the receive end can be improved in an entire NFC wireless charging process.

In the descriptions of the foregoing embodiments, the quantity of controllable switching transistors is 1 or 2. The following provides detailed descriptions in a receive end embodiment 4 by using an example in which the quantity of controllable switching transistors is 4.

Receive end embodiment 4:

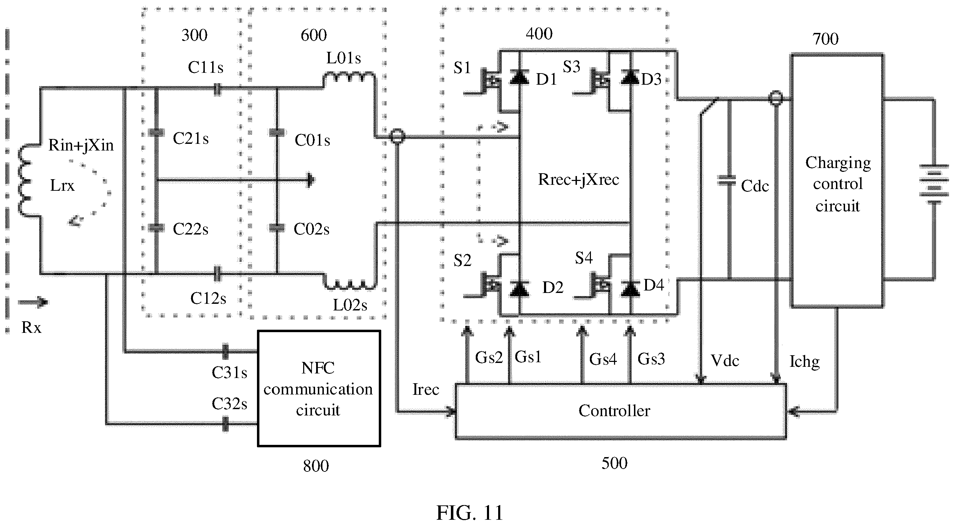

FIG. 11 is a schematic diagram of yet another receive end for NFC wireless charging according to this application.

A rectifier circuit 400 of the receive end includes a first bridge arm and a second bridge arm that are connected in parallel. A middle point of the first bridge arm is connected to a positive input terminal of a matching circuit 300, and a middle point of the second bridge arm is connected to a negative input terminal of the matching circuit 300.

The rectifier circuit 400 includes the following four controllable switching transistors: a first switching transistor S2, a second switching transistor S4, a third switching transistor S 1, and a fourth switching transistor S3. S2 is located in a lower-half bridge arm of the first bridge arm, S4 is located in a lower-half bridge arm of the second bridge arm, S 1 is located in an upper-half bridge arm of the first bridge arm, and S3 is located in an upper-half bridge arm of the second bridge arm. Specifically, the lower-half bridge arm of the first bridge arm is a first diode D2, and S2 is connected in parallel to two ends of D2; the lower-half bridge arm of the second bridge arm is a second diode D4, and S4 is connected in parallel to two ends of D4; the upper-half bridge arm of the first bridge arm is a third triode D1, and S 1 is connected in parallel to two ends of D1; and the upper-half bridge arm of the second bridge arm is a fourth diode D3, and S3 is connected in parallel to two ends of D3.

When a charging power is less than a preset power threshold, input impedance of the rectifier circuit 400 becomes larger, and the matching circuit 300 deviates from an optimal operating point. Therefore, a controller 500 controls an on/off state of S 1, an on/off state of S2, an on/off state of S3, and an on/off state of S4 to reduce the input impedance of the rectifier circuit 400, so that the matching circuit 300 operates at the optimal operating point, and when the charging power is less than the preset power threshold, charging efficiency of the receive end is improved.

In FIG. 11, Gs1 is a pulse control signal for S 1, Gs2 is a pulse control signal for S2, Gs3 is a pulse control signal for S3, and Gs4 is a pulse control signal for S4. The controller 500 controls Gs1 to be at a high level to control S 1 to be switched on, and controls Gs 1 to be at a low level to control S 1 to be switched off. Likewise, the controller 500 may also control Gs2 to control S2 to be switched on or switched off, control Gs3 to control S3 to be switched on or switched off, and control Gs4 to control S4 to be switched on or switched off.

When the charging power is less than the preset power threshold, and when an input current of the rectifier circuit 400 is positive, the controller 500 controls S4 to be switched on and S3 to be switched off; and controls S2 to be switched on for a preset time period, and then controls S 1 until the input current of the rectifier circuit 400 crosses zero.

When an input current of the rectifier circuit 400 is negative, the controller 500 controls S 1 to be switched off and S2 to be switched on; and controls S4 to be switched on for a preset time period, and then controls S3 until the input current of the rectifier circuit 400 crosses zero.

For ease of understanding, the following describes a technical solution of this application in detail with reference to an operating flowchart of a receive end.

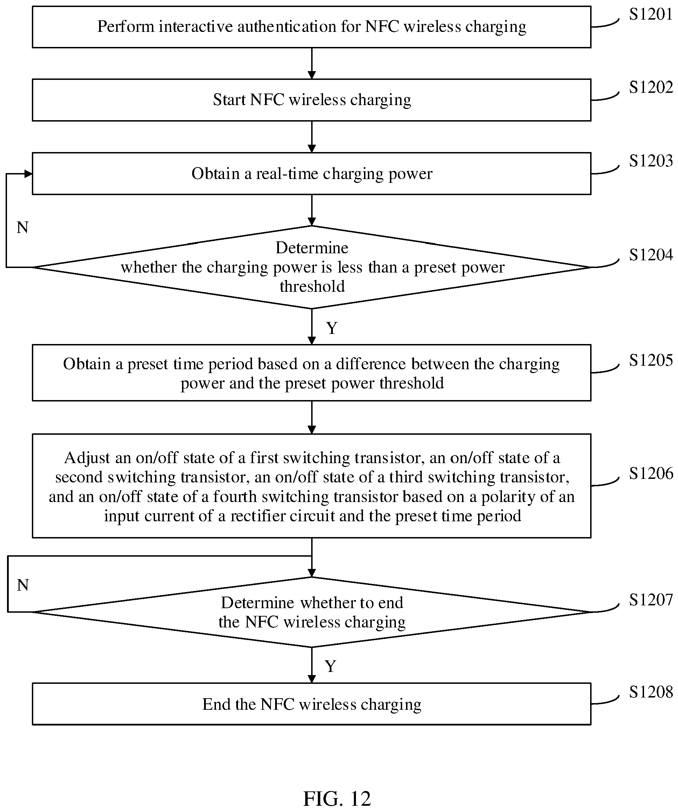

FIG. 12 is an operating flowchart of yet another receive end according to this application. S1201 to S1205 are similar to S901 to S905, and S1207 and S1208 are similar to S907 and S908. For specific content, refer to the receive end embodiment 3 and FIG. 9. Details are not described herein again. The following describes differences from the receive end embodiment 3.

S 1206: Adjust an on/off state of a first switching transistor, an on/off state of a second switching transistor, an on/off state of a third switching transistor, and an on/off state of a fourth switching transistor based on a polarity of an input current of the rectifier circuit and the preset time period. With reference to FIG. 11, when the first switching transistor S2, the second switching transistor S4, the third switching transistor S1, and the fourth switching transistor S3 are all switched off, and when the polarity of the input current of the rectifier circuit varies, a path in which the input current flows through the rectifier circuit varies. When the input current is positive, the input current flows into a positive input terminal of the rectifier circuit, sequentially flows through the third diode D1, a direct current bus capacitor Cdc, and the second diode D4, and flows out of a positive electrode of D4. When the input current is negative, the input current flows into a negative input terminal of the rectifier circuit, sequentially flows through the fourth diode D3, the direct current bus capacitor Cdc, and the first diode D2, and flows out of a positive electrode of D2. Therefore, the controller 500 may control an on/off state of S1, an on/off state of S2, an on/off state of S3, and an on/off state of S4 by detecting the polarity of the input current of the rectifier circuit 400, to reduce the input impedance of the rectifier circuit 400.

When the charging power is less than the preset power threshold, the input impedance of the rectifier circuit 400 becomes larger. Therefore, when the input current is positive, the controller 500 needs to control S4 to be switched on and S3 to be switched off; and control S2 to be switched on for a preset time period, and then control S1 to be switched on until the input current of the rectifier circuit crosses zero. The controller 500 may control an on/off state of S1, an on/off state of S2, an on/off state of S3, and an on/off state of S4 to change a path of the input current. Within the preset time period, the current sequentially passes through S2 and S4, and flows out of S4, so that the rectifier circuit 400 is bypassed, and the current does not enter a direct current bus. When the input current is negative, the controller 500 needs to control S2 to be switched on and S 1 to be switched off; and control S4 to be switched on for a preset time period, and then control S3 to be switched on until the input current of the rectifier circuit crosses zero. The controller 500 may control an on/off state of S 1, an on/off state of S2, an on/off state of S3, and an on/off state of S4 to change a path of the input current. Within the preset time period, the input current sequentially passes through S4 and S2, and flows out of S2, so that the rectifier circuit 400 is bypassed, and the input current does not enter the direct current bus.

The input current of the rectifier circuit cannot enter the direct current bus within the preset time period. Therefore, an output voltage of the rectifier circuit is reduced, so that the input impedance of the rectifier circuit is reduced.

Therefore, the controller 500 may adjust a value of $t_{on}$ for which S2 and S4 are switched on, to adjust the input impedance of the rectifier circuit 400.

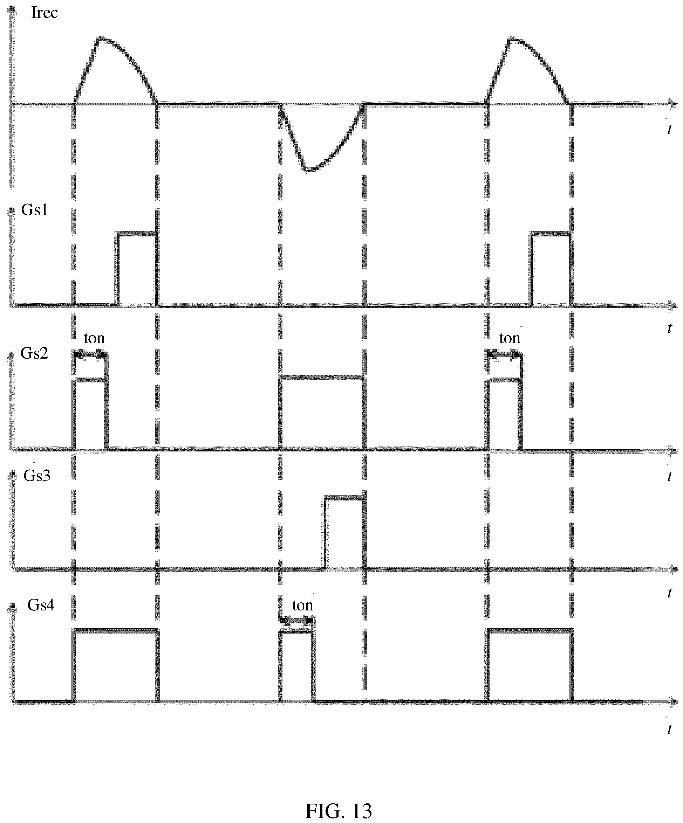

FIG. 13 is a diagram of an operating timing of another controllable switching transistor according to this application.

Gs 1 is a pulse control signal for the third switching transistor, Gs2 is a pulse control signal for the first switching transistor, Gs3 is a pulse control signal for the fourth switching transistor, and Gs4 is a pulse control signal for the second switching transistor. When Gs1 is at a high level, the third switching transistor is switched on; or when Gs1 is at a low level, the third switching transistor is switched off. The controller may control Gs1 to control the third switching transistor to be switched on or switched off. Likewise, the controller may also control Gs2 to control the first switching transistor to be switched on or switched off, and control Gs3 to control the fourth switching transistor to be switched on or switched off, and control Gs4 to control the second switching transistor to be switched on or switched off. $I_{rec}$ is the input current of the rectifier circuit.

When a polarity of the input current $I_{rec}$ of the rectifier circuit is positive, the controller controls the second switching transistor to be switched on; controls the fourth switching transistor to be switched off; and controls the first switching transistor to be switched on for a preset time period $t_{on}$ and then switched off, and after a delay of a preset time, controls the third switching transistor to be switched on; and when $I_{rec}$ becomes zero, controls the second switching transistor and the third switching transistor to be switched off. In this case, the first switching transistor, the second switching transistor, the third switching transistor, and the fourth switching transistor are all in an off state.

When a polarity of the input current $I_{rec}$ of the rectifier circuit is negative, the controller controls the first switching transistor to be switched on; controls the third switching transistor to be switched off; controls the second switching transistor to be switched on for $t_{on}$ and then switched off, and after a delay of a preset time, controls the fourth switching transistor to be switched on; and when $I_{rec}$ becomes zero, controls the first switching transistor and the fourth switching transistor to be switched off. In this case, the first switching transistor, the second switching transistor, the third switching transistor, and the fourth switching transistor are all in an off state. When the controller controls a controllable switching transistor to be switched off, the controllable switching transistor may not be completely switched off, causing a short circuit at an input terminal of the rectifier circuit. Therefore, after controlling the second switching transistor to be switched off, the controller needs to delay for the preset time, and then control the fourth controllable switching transistor to be switched on.

The controller may continuously adjust the input impedance of the rectifier circuit based on $t_{on}$ of the first switching transistor and $t_{on}$ of the second switching transistor. When $t_{on}$ is larger, an input voltage of the rectifier circuit is smaller, and when the charging power remains unchanged, the input impedance of the rectifier circuit is smaller. When $t_{on}$ is smaller, an input voltage of the rectifier circuit is larger, and when the charging power remains unchanged, the input impedance of the rectifier circuit is larger. Therefore, when the charging power is less than the preset power threshold, the controller may obtain a value of $t_{on}$ based on the difference between the charging power and the preset power threshold, to continuously adjust the input impedance of the rectifier circuit, to reduce impact of the input impedance of the rectifier circuit on charging efficiency of the receive end. Therefore, the matching circuit is still at an optimal operating point, and when the charging power is less than the preset power threshold, charging efficiency of the receive end can be improved.

When the charging power is less than the preset power threshold, the controller controls the on/off state of the first switching transistor, the on/off state of the second switching transistor, the on/off state of the third switching transistor, and the on/off state of the fourth switching transistor to reduce the input impedance of the rectifier circuit; and when the charging power is greater than the preset power threshold, the controller may also control the on/off state of the first switching transistor, the on/off state of the second switching transistor, the on/off state of the third switching transistor, and the on/off state of the fourth switching transistor to reduce the input impedance of the rectifier circuit, to adapt to a change of the charging power, and improve charging efficiency of the receive end when the charging power is greater than the preset power threshold. Therefore, charging efficiency of the receive end can be improved in an entire NFC wireless charging process. In addition, with reference to FIG. 11, in the rectifier circuit 400, S1 may be used to replace D1, S2 may be used to replace D2, S3 may be used to replace D3, and S4 may be used to replace D4, and the controller 500 controls on/off states of S1, S2, S3, and S4 to convert an alternating current into a direct current. The controller 500 directly controls the on/off states of S1, S2, S3, and S4 to reduce the input impedance of the rectifier circuit 400.

Based on the receive end provided in the foregoing embodiments, an embodiment of this application further provides a wireless charging method. This application is not specifically limited to NFC wireless charging. For ease of description, technical solutions of this application are described by using the NFC wireless charging as an example.

Method embodiment 1:

An embodiment of this application further provides a wireless charging method. The following provides detailed descriptions with reference to accompanying drawings.

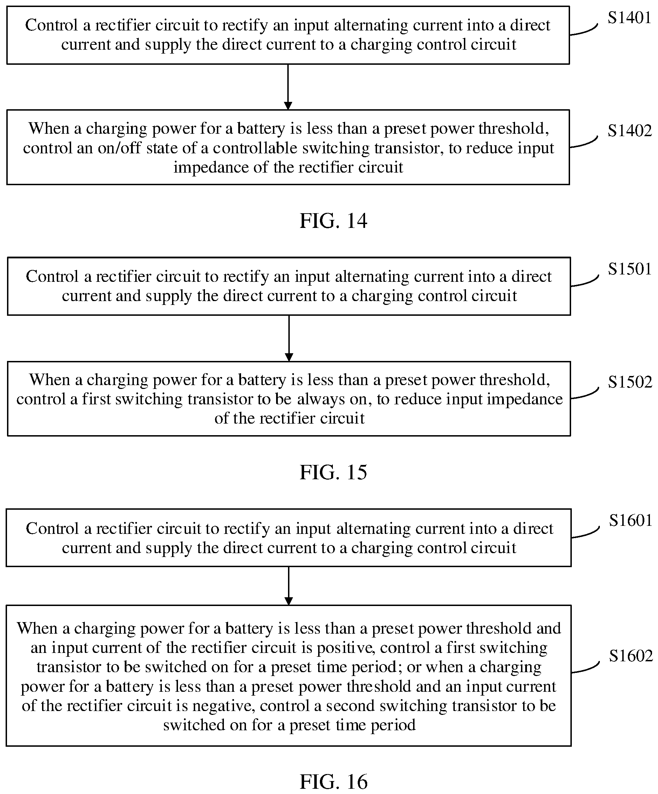

FIG. 14 is a flowchart of a wireless charging method according to this application.

The wireless charging method provided in this embodiment is applied to a receive end for NFC wireless charging. The receive end charges a battery by using energy provided by a transmit end. The receive end includes a receive coil, a matching circuit, and a rectifier circuit. The rectifier circuit includes at least one controllable switching transistor. For the receive end, refer to the receive end shown in FIG. 3. Details are not described herein again.

The method includes the following steps.

S 1401: Control the rectifier circuit to rectify an input alternating current into a direct current and supply the direct current to a charging control circuit.

In an NFC wireless charging process, after receiving energy transmitted by the transmit end, the receive coil of the receive end outputs an alternating current. Therefore, the rectifier circuit needs to rectify the alternating current into a direct current and supply the direct current to the charging control circuit, so that the charging control circuit charges the battery. For a specific NFC wireless charging process, refer to the receive end embodiment 1 and FIG. 4. Details are not described herein again.

S 1402: When a charging power for the battery is less than a preset power threshold, control an on/off state of the controllable switching transistor to reduce input impedance of the rectifier circuit. In an NFC wireless charging process, as a charging time increases, a battery level becomes increasingly high, and the receive end no longer charges the battery at a rated power, but charges the battery at a charging power less than the rated power. The charging power for the battery becomes smaller, and output impedance of the rectifier circuit becomes larger. Because the input impedance of the rectifier circuit is positively correlated with the output impedance, the input impedance also becomes larger. However, a parameter of the matching circuit is designed based on charging the battery by the receive end at the rated power. After the charging power for the battery becomes smaller, the input impedance of the rectifier circuit becomes larger. As a result, the matching circuit deviates from an optimal operating point. Therefore, when the charging power is less than the preset power threshold, the on/off state of the controllable switching transistor needs to be controlled to reduce the input impedance of the rectifier circuit. For a specific control method, refer to the receive end embodiment 1 of this application and FIG. 3 and FIG. 4. Details are not described herein again.

With the NFC wireless charging method in this solution, when the charging power is less than the preset power threshold, the controllable switching transistor is adjusted to be switched on, so that the rectifier circuit is bypassed, thereby reducing the input impedance of the rectifier circuit, and reducing impact of an increase of the input impedance of the rectifier circuit on charging efficiency of the receive end. Therefore, when the charging power is less than the preset power threshold, charging efficiency of the receive end can be improved.

Method embodiment 2:

FIG. 15 is a flowchart of another wireless charging method according to this application.

The wireless charging method provided in this embodiment is applied to a receive end for NFC wireless charging. The receive end charges a battery by using energy provided by a transmit end. The receive end includes a receive coil, a matching circuit, and a rectifier circuit. The rectifier circuit includes a first switching transistor. For the receive end, refer to the receive end shown in FIG. 6. Details are not described herein again.

The method includes the following steps.

S1501: Control the rectifier circuit to rectify an input alternating current into a direct current and supply the direct current to a charging control circuit.

In an NFC wireless charging process, after receiving energy transmitted by the transmit end, the receive coil of the receive end outputs an alternating current. Therefore, the rectifier circuit needs to rectify the alternating current into a direct current and supply the direct current to the charging control circuit, so that the charging control circuit charges the battery. For a specific process of NFC wireless charging, refer to the receive end embodiment 2 and FIG. 7. Details are not described herein again.

S 1502: When a charging power for the battery is less than a preset power threshold, control the first switching transistor to be always on, to reduce input impedance of the rectifier circuit.

It can be learned from S 1402 that, when the charging power is less than the preset power threshold, an on/off state of a controllable switching transistor may be controlled to reduce the input impedance of the rectifier circuit. When the rectifier circuit includes the first switching transistor, and when the charging power is less than the preset power threshold, the first switching transistor is controlled to be always on until the NFC wireless charging ends, to reduce the input impedance of the rectifier circuit. For a specific process of controlling the first switching transistor, refer to the receive end embodiment 2 and FIG. 6 and FIG. 7. Details are not described herein again.

In addition, the first switching transistor is a high-frequency switching transistor. The first switching transistor is controlled to be switched on until the NFC wireless charging ends, and the first switching transistor is no longer controlled to be frequently switched on or switched off, thereby reducing a loss caused by switching on or switching off the first switching transistor.

Therefore, the first switching transistor is controlled to be always on until the NFC wireless charging ends, thereby further reducing a loss caused by the rectifier circuit.

With reference to FIG. 7, a loss caused by a current flowing through a high-frequency switching transistor is less than a loss caused by a current flowing through a diode, and when the charging power is less than the preset power threshold, the first switching transistor S2 is controlled to be switched on until the NFC wireless charging ends. Therefore, in a subsequent NFC wireless charging process, a current flows through the first switching transistor S2, thereby further reducing a loss caused by the rectifier circuit 400.

Method embodiment 3:

FIG. 16 is a flowchart of still another wireless charging method according to this application.

The wireless charging method provided in this embodiment is applied to a receive end for NFC wireless charging. The receive end charges a battery by using energy provided by a transmit end. The receive end includes a receive coil, a matching circuit, and a rectifier circuit. The rectifier circuit includes a first switching transistor and a second switching transistor. For the receive end, refer to the receive end shown in FIG. 8. Details are not described herein again.

The method includes the following steps.

S 1601: Control the rectifier circuit to rectify an input alternating current into a direct current and supply the direct current to a charging control circuit.

In an NFC wireless charging process, after receiving energy transmitted by the transmit end, the receive coil of the receive end outputs an alternating current. Therefore, the rectifier circuit needs to rectify the alternating current into a direct current and supply the direct current to the charging control circuit, so that the charging control circuit charges the battery. For a specific NFC wireless charging process, refer to the receive end embodiment 3 and FIG. 9. Details are not described herein again.

S 1602: When a charging power for the battery is less than a preset power threshold and an input current of the rectifier circuit is positive, control the first switching transistor to be switched on for a preset time period; or when a charging power for the battery is less than a preset power threshold and an input current of the rectifier circuit is negative, control the second switching transistor to be switched on for a preset time period.

When a polarity of the input current of the rectifier circuit varies, a path in which the current flows through the rectifier circuit varies. Therefore, the polarity of the input current of the rectifier circuit needs to be obtained first, and then an on/off state of the first switching transistor and an on/off state of the second switching transistor are controlled based on the polarity of the input current of the rectifier circuit to reduce input impedance of the rectifier circuit.

When the charging power is less than the preset power threshold, if the input current of the rectifier circuit is positive, the first switching transistor is controlled to be switched on for the preset time period; or if the input current of the rectifier circuit is negative, the second switching transistor is controlled to be switched on for the preset time period. The preset time period is obtained based on a difference between the charging power and the preset power threshold, and the preset time period is positively correlated with the difference. For a specific process of controlling the first switching transistor and the second switching transistor, refer to the receive end embodiment 3 and

FIG. 9 and FIG. 10. Details are not described herein again.

With the NFC wireless charging method in this solution, when the charging power is less than the preset power threshold, the first switching transistor may be controlled to be switched on for the preset time period, and the second switching transistor may be controlled to be switched on for the preset time period, to continuously adjust the input impedance of the rectifier circuit. When the preset time period is longer, an input voltage of the rectifier circuit is smaller, and when the charging power remains unchanged, the input impedance of the rectifier circuit becomes smaller. Therefore, when the charging power is less than the preset power threshold, the preset time period may be obtained based on the difference between the charging power and the preset power threshold, and the first switching transistor may be controlled to be switched on for the preset time period, and the second switching transistor may be controlled to be switched on for the preset time period, to continuously adjust the input impedance of the rectifier circuit, to reduce impact of the input impedance of the rectifier circuit on charging efficiency of the receive end. Therefore, with the NFC wireless charging method in this solution, when the charging power is less than the preset power threshold, charging efficiency of the receive end can be improved.

In addition, when the charging power is greater than the preset power threshold, the on/off state of the first switching transistor and the on/off state of the second switching transistor may also be controlled to reduce the input impedance of the rectifier circuit, to improve charging efficiency of the receive end when the charging power is greater than the preset power threshold. Therefore, charging efficiency of the receive end can be improved in an entire NFC wireless charging process. Method embodiment 4:

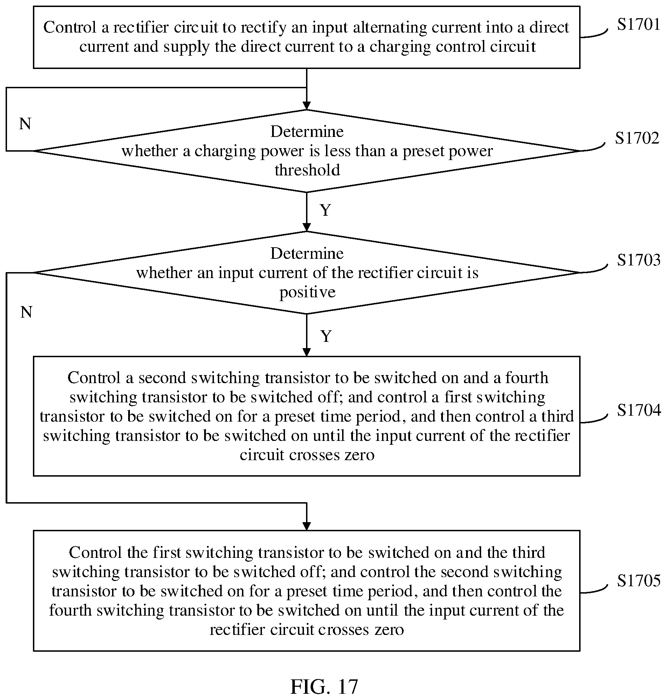

FIG. 17 is a flowchart of yet another wireless charging method according to this application.

The wireless charging method provided in this embodiment is applied to a receive end for NFC wireless charging. The receive end charges a battery by using energy provided by a transmit end.

The receive end includes a receive coil, a matching circuit, and a rectifier circuit. The rectifier circuit includes a first switching transistor, a second switching transistor, a third switching transistor, and a fourth switching transistor. For the receive end, refer to the receive end shown in FIG. 11. Details are not described herein again.

The method includes the following steps.

S1701: Control the rectifier circuit to rectify an input alternating current into a direct current and supply the direct current to a charging control circuit.

In an NFC wireless charging process, after receiving energy transmitted by the transmit end, the receive coil of the receive end outputs an alternating current. Therefore, the rectifier circuit needs to rectify the alternating current into a direct current and supply the direct current to the charging control circuit, so that the charging control circuit charges the battery. For a specific NFC wireless charging process, refer to the receive end embodiment 4 and FIG. 12. Details are not described herein again.

S 1702: Determine whether a charging power is less than a preset power threshold. If yes, perform S1703.

For a specific manner of determining whether the charging power is less than the preset power threshold, refer to the receive end embodiment 4 and FIG. 12. Details are not described herein again.

S 1703: Determine whether an input current of the rectifier circuit is positive. If yes, perform S 1704; or if no, perform S1705.

When a polarity of the input current of the rectifier circuit varies, a path in which the current flows through the rectifier circuit varies. For the path in which the current flows through the rectifier circuit, refer to the receive end embodiment 4 and FIG. 11. Details are not described herein again. When the polarity of the input current of the rectifier circuit varies, on/off states of different controllable switching transistors need to be controlled to reduce input impedance of the rectifier circuit.

S1704: Control the second switching transistor to be switched on and the fourth switching transistor to be switched off; and control the first switching transistor to be switched on for a preset time period, and then control the third switching transistor to be switched on until the input current of the rectifier circuit crosses zero.

S1705: Control the first switching transistor to be switched on and the third switching transistor to be switched off; and control the second switching transistor to be switched on for a preset time period, and then control the fourth switching transistor to be switched on until the input current of the rectifier circuit crosses zero.

For a specific process of controlling an on/off state of the first switching transistor, an on/off state of the second switching transistor, an on/off state of the third switching transistor, and an on/off state of the fourth switching transistor, refer to the receive end embodiment 4 and FIG. 12 and FIG. 13. Details are not described herein again.

With the NFC wireless charging method in this solution, when the charging power is less than the preset power threshold, the first switching transistor may be controlled to be switched on for the preset time period, the second switching transistor may be controlled to be switched on for the preset time period, and the on/off state of the third switching transistor and the on/off state of the fourth switching transistor may be controlled, to continuously adjust the input impedance of the rectifier circuit.

In addition, when the charging power is less than the preset power threshold, the on/off state of the first switching transistor, the on/off state of the second switching transistor, the on/off state of the third switching transistor, and the on/off state of the fourth switching transistor may be controlled to reduce the input impedance of the rectifier circuit; and when the charging power is greater than the preset power threshold, a preset time period may also be obtained, and the on/off state of the first switching transistor, the on/off state of the second switching transistor, the on/off state of the third switching transistor, and the on/off state of the fourth switching transistor are controlled based on the preset time period to reduce the input impedance of the rectifier circuit, to improve charging efficiency of the receive end when the charging power is greater than the preset power threshold. Therefore, charging efficiency of the receive end can be improved in an entire NFC wireless charging process.

Electronic device embodiment 1:

Based on the receive end provided in the foregoing embodiments, an embodiment of this application further provides an electronic device. The electronic device may be a mobile phone (mobile phone), a tablet computer (pad), a computer with a wireless transceiver function, an intelligent wearable product (for example, a smartwatch, a smart band, or a headset), a virtual reality (VR, virtual reality) terminal device, an augmented reality (AR, augmented reality) terminal device, or the like. The electronic device includes the receive end described in any one of the foregoing embodiments. The receive end charges a battery of the electronic device by using energy provided by a transmit end.

The electronic device includes the receive end described in the foregoing embodiments. A rectifier circuit of the receive end includes at least one controllable switching transistor. When a charging power for the battery is less than a preset power threshold, a controller controls an on/off state of the controllable switching transistor to reduce input impedance of the rectifier circuit.

A matching circuit of the receive end is designed based on a rated power during charging. However, in a charging process, it is impossible to perform charging always at the rated power. Therefore, when the charging power is less than the preset power threshold, the input impedance of the rectifier circuit needs to be adjusted, to adapt to a varying charging power and improve charging efficiency. Specifically, the controller of the receive end may control the on/off state of the controllable switching transistor to reduce the input impedance of the rectifier circuit. When the charging power is small, the input impedance of the rectifier circuit becomes larger. In this solution, the on/off state of the controllable switching transistor is controlled to forcibly reduce the input impedance of the rectifier circuit, to suppress impact of an increase of the input impedance of the rectifier current on charging efficiency. Therefore, when the charging power is less than the preset power threshold, charging efficiency of the electronic device including the receive end can be improved.

It should be understood that, in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between associated objects. "At least one of the following items (pieces)" or a similar expression thereof refers to any combination of these items, including any combination of singular items (pieces) or plural items (pieces). For example, at least one (piece) of a, b, or c may indicate a, b, c, "a and b", "a and c", "b and c", or "a, b, and c", where a, b, and c may be singular or plural. The foregoing descriptions are merely example embodiments of this application, but are not intended to limit this application in any form. Although the example embodiments of this application are disclosed above, embodiments are not intended to limit this application. By using the method and the technical content disclosed above, any person of ordinary skill in the art can make a plurality of possible changes and modifications on the technical solutions of this application, or amend the technical solutions thereof to be embodiments with equal effects through equivalent variations without departing from the protection scope of the technical solutions of this application. Therefore, any simple amendments, equivalent variations, or modifications made to the foregoing embodiments based on the technical essence of this application without departing from content of technical solutions of this application still fall within the protection scope of technical solutions of this application.

**Claims**

1. A receive end for wireless charging, configured to charge a battery by using energy provided by a transmit end, and comprising a receive coil, a matching circuit, a rectifier circuit, and a controller, wherein

   an input terminal of the matching circuit is connected to the receive coil, and an output terminal of the matching circuit is connected to an input terminal of the rectifier circuit;
   the receive coil is configured to: receive the energy transmitted by the transmit end, and output an alternating current;

the matching circuit is configured to: perform matching on the alternating current, and supply the alternating current to the input terminal of the rectifier circuit;

the rectifier circuit comprises a controllable switching transistor, and the rectifier circuit is configured to: rectify the input alternating current into a direct current under control of the controller, and supply the direct current to a charging control circuit; and

the controller is configured to: when a charging power for charging the battery is less than a preset power threshold, control an on/off state of the controllable switching transistor, to reduce input impedance of the rectifier circuit.

2. The receive end according to claim 1, wherein the controller is specifically configured to: when the charging power is less than the preset power threshold, control the controllable switching transistor to be switched on within a preset time period, so that the rectifier circuit is bypassed.

3. The receive end according to claim 2, wherein the controller is specifically configured to obtain the preset time period based on a difference between the charging power and the preset power threshold, and the preset time period is directly proportional to the difference.

4. The receive end according to claim 2 or 3, wherein the rectifier circuit comprises at least one bridge arm that comprises at least one diode, and the controllable switching transistor is connected in parallel to two ends of one diode of the at least one diode; and the controller is configured to: when the charging power is less than the preset power threshold, control the controllable switching transistor to be switched on, to bypass the rectifier circuit to reduce the input impedance of the rectifier circuit.

5. The receive end according to claim 4, wherein the rectifier circuit is a full-bridge rectifier circuit, and the rectifier circuit comprises a first bridge arm and a second bridge arm that are connected in parallel; a middle point of the first bridge arm is connected to a positive output terminal of the matching circuit, and a middle point of the second bridge arm is connected to a negative output terminal of the matching circuit; and the controllable switching transistor is located in at least one of the first bridge arm and the second bridge arm.

6. The receive end according to claim 5, wherein the rectifier circuit comprises a first switching transistor, and the first switching transistor is located in the first bridge arm or the second bridge arm; and the controller is configured to: when the charging power is less than the preset power threshold, control the first switching transistor to be switched on for the preset time period.

7. The receive end according to claim 5, wherein the rectifier circuit comprises the following two controllable switching transistors: a first switching transistor and a second switching transistor, the first switching transistor is located in a lower-half bridge arm of the first bridge arm, and the second switching transistor is located in a lower-half bridge arm of the second bridge arm; and

the controller is configured to: when the charging power for the battery is less than the preset power threshold and the input current of the rectifier circuit is positive, control the first switching transistor to be switched on for the preset time period, and the controller is further configured to: when the charging power for the battery is less than the preset power threshold and the input current of the rectifier circuit is negative, control the second switching transistor to be switched on for the preset time period.

8. The receive end according to claim 5, wherein the rectifier circuit is a full-bridge rectifier circuit and comprises the following four controllable switching transistors: a first switching transistor, a second switching transistor, a third switching transistor, and a fourth switching transistor;

the first switching transistor is located in a lower-half bridge arm of the first bridge arm, the second switching transistor is located in a lower-half bridge arm of the second bridge arm, the third switching transistor is located in an upper-half bridge arm of the first bridge arm, and the fourth switching transistor is located in an upper-half bridge arm of the second bridge arm;

the controller is configured to: when the charging power for the battery is less than the preset power threshold and the input current of the rectifier circuit is positive, control the second switching transistor to be switched on, control the fourth switching transistor to be switched off, control the first switching transistor to be switched on for the preset time period, and control the third switching transistor to be switched on until the input current of the rectifier circuit becomes zero; and

the controller is further configured to: when the charging power for the battery is less than the preset power threshold and the input current of the rectifier circuit is negative, control the third switching transistor to be switched off, control the first switching transistor to be switched on, control the second switching transistor to be switched on for the preset time period, and control the fourth switching transistor to be switched on until the input current of the rectifier circuit becomes zero.

9. A control method for wireless charging, applied to a receive end for wireless charging, wherein the receive end is configured to charge a battery by using energy provided by a transmit end, the receive end comprises a receive coil, a matching circuit, and a rectifier circuit, and the rectifier circuit comprises a controllable switching transistor; and
the method comprises:

controlling the rectifier circuit to rectify an input alternating current into a direct current and supply the direct current to a charging control circuit; and
when a charging power for charging the battery is less than a preset power threshold, controlling an on/off state of the controllable switching transistor, to reduce input impedance of the rectifier circuit.

10. The method according to claim 9, wherein the controlling an on/off state of the controllable switching transistor, to reduce input impedance of the rectifier circuit comprises:
controlling the controllable switching transistor to be switched on within a preset time period, so that the rectifier circuit is bypassed.

11. The method according to claim 10, wherein the preset time period is obtained based on a difference between the charging power and the preset power threshold, and the preset time period is directly proportional to the difference.

12. The method according to claim 10 or 11, wherein the rectifier circuit comprises at least one bridge arm that comprises at least one diode, and the controllable switching transistor is connected in parallel to two ends of one diode of the at least one diode; and the controlling an on/off state of the controllable switching transistor, to reduce input impedance of the rectifier circuit comprises:
controlling the controllable switching transistor to be switched on, to bypass the rectifier circuit to reduce the input impedance of the rectifier circuit.

13. The method according to claim 12, wherein the rectifier circuit is a full-bridge rectifier circuit, and the rectifier circuit comprises a first bridge arm and a second bridge arm that are connected in parallel; a middle point of the first bridge arm is connected to a positive output terminal of the matching circuit, and a middle point of the second bridge arm is connected to a negative output terminal of the matching circuit; and the controllable switching transistor is located in at least one of the first bridge arm and the second bridge arm.

14. The method according to claim 13, wherein the rectifier circuit comprises a first switching transistor, and the first switching transistor is located in the first bridge arm or the second bridge arm; and the controlling at least one of controllable switching transistors to be switched on for the preset time period comprises:
controlling the first switching transistor to be switched on for the preset time period.

15. The method according to claim 13, wherein the rectifier circuit comprises the following two controllable switching transistors: a first switching transistor and a second switching transistor, the first switching transistor is located in a lower-half bridge arm of the first bridge arm, and the second switching transistor is located in a lower-half bridge arm of the second bridge arm; and the controlling at least one of controllable switching transistors to be switched on for the preset time period comprises:

when the input current of the rectifier circuit is positive, controlling the first switching transistor to be switched on for the preset time period; and when the input current of the rectifier circuit is negative, controlling the second switching transistor to be switched on for the preset time period.

16. The method according to claim 13, wherein the rectifier circuit is a full-bridge rectifier circuit and comprises the following four controllable switching transistors: a first switching transistor, a second switching transistor, a third switching transistor, and a fourth switching transistor, the first switching transistor is located in a lower-half bridge arm of the first bridge arm, the second switching transistor is located in a lower-half bridge arm of the second bridge arm, the third switching transistor is located in an upper-half bridge arm of the first bridge arm, and the fourth switching transistor is located in an upper-half bridge arm of the second bridge arm; and the controlling at least one of controllable switching transistors to be switched on for the preset time period comprises:

when the input current of the rectifier circuit is positive, controlling the second switching transistor to be switched on, controlling the fourth switching transistor to be switched off, controlling the first switching transistor to be switched on for the preset time period, and controlling the third switching transistor to be switched on until the input current of the rectifier circuit becomes zero; and
when the input current of the rectifier circuit is negative, controlling the third switching transistor to be switched off, controlling the first switching transistor to be switched on, controlling the second switching transistor to be switched on for the preset time period, and controlling the fourth switching transistor to be switched on until the input current of the rectifier circuit becomes zero.

17. An electronic device, comprising the receive end according to any one of claims 1 to 8.

FIG. 1A

FIG. 1B

FIG. 2

FIG. 3

FIG. 4

FIG. 5A

FIG. 5B

FIG. 6

EP 4 152 562 A1

Perform interactive authentication for NFC wireless charging — S701

Start NFC wireless charging — S702

Obtain a real-time charging power — S703

Determine whether the charging power is less than a preset power threshold — S704

N

Y

Adjust an on/off state of a first switching transistor — S705

Determine whether to end the NFC wireless charging — S706

N

Y

End the NFC wireless charging — S707

FIG. 7

FIG. 8

FIG. 9

FIG. 10

FIG. 11

Perform interactive authentication for NFC wireless charging —— S1201

Start NFC wireless charging —— S1202

Obtain a real-time charging power —— S1203

N

Determine
whether the charging power is less than a preset power
threshold —— S1204

Y

Obtain a preset time period based on a difference between the charging
power and the preset power threshold —— S1205

Adjust an on/off state of a first switching transistor, an on/off state of a
second switching transistor, an on/off state of a third switching transistor,
and an on/off state of a fourth switching transistor based on a polarity of an
input current of a rectifier circuit and the preset time period —— S1206

N

Determine whether to end
the NFC wireless charging —— S1207

Y

End the NFC wireless charging —— S1208

FIG. 12

FIG. 13

| Control a rectifier circuit to rectify an input alternating current into a direct current and supply the direct current to a charging control circuit | S1401 |

| When a charging power for a battery is less than a preset power threshold, control an on/off state of a controllable switching transistor, to reduce input impedance of the rectifier circuit | S1402 |

FIG. 14

| Control a rectifier circuit to rectify an input alternating current into a direct current and supply the direct current to a charging control circuit | S1501 |

| When a charging power for a battery is less than a preset power threshold, control a first switching transistor to be always on, to reduce input impedance of the rectifier circuit | S1502 |

FIG. 15

| Control a rectifier circuit to rectify an input alternating current into a direct current and supply the direct current to a charging control circuit | S1601 |

| When a charging power for a battery is less than a preset power threshold and an input current of the rectifier circuit is positive, control a first switching transistor to be switched on for a preset time period; or when a charging power for a battery is less than a preset power threshold and an input current of the rectifier circuit is negative, control a second switching transistor to be switched on for a preset time period | S1602 |

FIG. 16

Control a rectifier circuit to rectify an input alternating current into a direct current and supply the direct current to a charging control circuit — S1701

N

Determine whether a charging power is less than a preset power threshold — S1702

Y

Determine whether an input current of the rectifier circuit is positive — S1703

N

Y

Control a second switching transistor to be switched on and a fourth switching transistor to be switched off; and control a first switching transistor to be switched on for a preset time period, and then control a third switching transistor to be switched on until the input current of the rectifier circuit crosses zero — S1704

Control the first switching transistor to be switched on and the third switching transistor to be switched off; and control the second switching transistor to be switched on for a preset time period, and then control the fourth switching transistor to be switched on until the input current of the rectifier circuit crosses zero — S1705

FIG. 17

## INTERNATIONAL SEARCH REPORT

| International application No. |
| --- |
| **PCT/CN2021/080675** |

### A. CLASSIFICATION OF SUBJECT MATTER

H02J 50/12(2016.01)i;  H02J 7/00(2006.01)i

According to International Patent Classification (IPC) or to both national classification and IPC

### B. FIELDS SEARCHED

Minimum documentation searched (classification system followed by classification symbols)

H02J50/-;H02J7/-;H02M7/-

Documentation searched other than minimum documentation to the extent that such documents are included in the fields searched

Electronic data base consulted during the international search (name of data base and, where practicable, search terms used)

CNABS, CNTXT, CNKI: 无线充电, 效率, 功率, 整流, 阻抗, 全桥, 半桥, 开关, 旁路 VEN, USTXT: wireless charg+, power, efficient, rectifier, impedance, half-bridge, full-birdge, switch

### C. DOCUMENTS CONSIDERED TO BE RELEVANT

| Category* | Citation of document, with indication, where appropriate, of the relevant passages | Relevant to claim No. |
| --- | --- | --- |
| PX | CN 111817448 A (HUAWEI TECHNOLOGIES CO., LTD.) 23 October 2020 (2020-10-23) claims 1-17 | 1-17 |
| Y | CN 109874361 A (SAMSUNG ELECTRONICS CO., LTD.) 11 June 2019 (2019-06-11) description, paragraphs 12-16, 68-95, figures 3-7 | 1-17 |
| Y | CN 107431385 A (MAPS INC.) 01 December 2017 (2017-12-01) description, paragraphs 35-41, figures 2-6 | 1-17 |
| A | CN 104779672 A (SOUTHEAST UNIVERSITY) 15 July 2015 (2015-07-15) description, paragraphs 2-12 | 1-17 |
| A | CN 109327065 A (HUAWEI TECHNOLOGIES CO., LTD.) 12 February 2019 (2019-02-12) description, paragraphs 2-53 | 1-17 |
| A | JP 2019103386 A (TDK CORP.) 24 June 2019 (2019-06-24) description paragraphs 66-69 | 1-17 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 May 2021** | **28 May 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/080675**

| Patent document cited in search report | | | Publication date (day/month/year) | Patent family member(s) | | | Publication date (day/month/year) |
|---|---|---|---|---|---|---|---|
| CN | 111817448 | A | 23 October 2020 | None | | | |
| CN | 109874361 | A | 11 June 2019 | US | 2017155272 | A1 | 01 June 2017 |
| | | | | EP | 3347966 | A1 | 18 July 2018 |
| | | | | KR | 20170064380 | A | 09 June 2017 |
| | | | | WO | 2017095112 | A1 | 08 June 2017 |
| | | | | US | 10135289 | B2 | 20 November 2018 |
| | | | | EP | 3347966 | B1 | 16 September 2020 |
| | | | | EP | 3347966 | A4 | 26 September 2018 |
| CN | 107431385 | A | 01 December 2017 | WO | 2016148481 | A1 | 22 September 2016 |
| | | | | US | 2018062445 | A1 | 01 March 2018 |
| | | | | KR | 20160112291 | A | 28 September 2016 |
| | | | | KR | 101739085 | B | 24 May 2017 |
| | | | | US | 10320239 | B2 | 11 June 2019 |
| | | | | CN | 107431385 | B | 20 November 2020 |
| CN | 104779672 | A | 15 July 2015 | None | | | |
| CN | 109327065 | A | 12 February 2019 | None | | | |
| JP | 2019103386 | A | 24 June 2019 | CN | 109980791 | A | 05 July 2019 |
| | | | | US | 2019165611 | A1 | 30 May 2019 |
| | | | | US | 10903691 | B2 | 26 January 2021 |

Form PCT/ISA/210 (patent family annex) (January 2015)

**REFERENCES CITED IN THE DESCRIPTION**

**Patent documents cited in the description**

- CN 2020105119563